# FASCICULE DE BREVET EUROPEEN

(11) **EP 1 240 587 B1**
(45) Date de publication et mention de la délivrance du brevet: **20.10.2004**
(21) Numéro de dépôt: 00990096.0
(22) Date de dépôt: 21.12.2000
(51) Int. Cl.: G06F 11/14, G06F 11/16

(54) **SYSTEME INFORMATIQUE TOLERANT AUX ERREURS TRANSITOIRES ET PROCEDE DE GESTION DANS UN TEL SYSTEME**
RECHNERSYSTEM, WELCHES GEGENÜBER VORÜBERGEHENDEN FEHLERN FEHLERTOLERANT IST UND VERFAHREN ZUR VERWALTUNG DIESES SYSTEMS
COMPUTER SYSTEM THAT TOLERATES TRANSIENT ERRORS AND METHOD FOR MANAGEMENT IN A SYSTEM OF THIS TYPE

(30) Priorité: 22.12.1999 FR 9916227
(43) Date de publication de la demande: 18.09.2002
(73) Titulaire: CENTRE NATIONAL D'ETUDES SPATIALES, 75001 Paris (FR)
(72) Inventeur: PIGNOL, Michel, F-31000 Toulouse (FR)
(74) Mandataire: Ilgart, Jean-Christophe
(86) Numéro de dépôt international: PCT/FR2000/003640
(87) Numéro de publication internationale: WO 2001/046805

(56) Documents cités:
- EP-A- 0 440 312
- US-A- 5 778 206
- US-A- 5 790 397
- JANUSZ SOSNOWSKI: "TRANSIENT FAULT TOLERANCE IN DIGITAL SYSTEMS" IEEE MICRO,US,IEEE INC. NEW YORK, vol. 14, no. 1, 1 février 1994 (1994-02-01), pages 24-35, XP000433306 ISSN: 0272-1732

## Description

### DOMAINE TECHNIQUE

La présente invention concerne un système informatique tolérant aux erreurs transitoires et un procédé de gestion dans un tel système.

Le domaine de l'invention est celui des architectures informatiques soumises à des environnements perturbants pour les composants électroniques (radiations, perturbations électromagnétiques) susceptibles d'engendrer des erreurs transitoires, par exemple dans les domaines :
- spatial, nucléaire et aéronautique, où l'environnement est constitué entre autre d'ions lourds,
- automobile, soumis à un environnement électromagnétique sévère.

### ÉTAT DE LA TECHNIQUE ANTÉRIEURE

Dans la suite de la description, l'exemple du domaine spatial, qui est très représentatif des erreurs transitoires aléatoirement générées sur des composants électroniques, est utilisé.

Les concepteurs d'architectures informatiques pour satellites sont confrontés au problème des radiations existantes dans l'espace. L'un des effets de ces radiations est nommé "événement singulier" (en anglais "upset" ou "Single Event Upset"), correspondant à un ou plusieurs changements d'états temporaires de bits dans des composants électroniques tels que des mémoires. Les erreurs engendrées par les événements singuliers peuvent aboutir à la génération de données erronées (e.g. mauvaise commande d'un actuateur du satellite), ou à une perturbation grave du séquencement du logiciel (i.e. plantage du microprocesseur).

Jusqu'à présent, la solution aux erreurs de type événement singulier réside dans l'utilisation de technologies de circuits intégrés peu sensibles à ce phénomène (dites "tolérantes aux radiations"), voire insensibles (dites "durcies aux radiations"). De telles technologies ne sont pas utilisées par l'industrie micro-électronique industrielle, et par conséquent ont été développées spécifiquement pour les applications militaires et spatiales.

Le coût global associé à l'existence de telles technologies micro-électronique et du développement de composants pour celles-ci (développement, maintenance, évolution continuelle des performances), et donc le coût de vente de ces composants, est très élevé (le développement d'une nouvelle filière micro-électronique peut avoisiner 1 Gigafranc ; le coût d'achat d'un microprocesseur tolérant ou durci aux radiations est de plusieurs dizaines de kilofrancs, alors que sa version commerciale est de quelques milliers de francs ; le ratio durci/commercial peut être de 100 ou plus) .

Le ministère de la défense américain a donné un coup de frein à l'utilisation de composants électroniques militaires pour ses applications, et accéléré le processus d'appropriation par les activités militaires des spécifications / normes / composants commerciaux.

La part de marché des composants militaires, dits "haute fiabilité", a fortement chuté, de 80 % dans les années 1960 à moins de 1% en 1995 (forte augmentation de l'utilisation de composants électroniques par l'industrie, réduction des marchés militaires) ; au point que ces composants pourraient être amenés à disparaître prochainement (de grands fabricants de composants militaires se sont retirés de ce marché de moins en moins porteur).

La possibilité d'utiliser des composants commerciaux dans les applications spatiales est un problème auquel est confronté tout projet de nouvelle génération. On attend de l'utilisation de ce type de composants dans le spatial les avantages suivants :
- Résolution du problème de la réduction constatée de l'offre en composants "haute fiabilité", suite aux retraits de ce marché de fournisseurs majeurs.
- Réduction des coûts : le poste. "composants haute fiabilité" est non négligeable dans le coût total du développement d'un équipement, et devient prépondérant dans son coût récurrent. Le poids des composants est cependant très variable en fonction de la cible prise en compte (plate-forme, charge utile, équipement, niveau de récurrence, etc.).
- Utilisation de fonctions/composants plus performants, permettant de réduire le volume d'électronique (optimisation de la masse / consommation / fiabilité) et/ou d'augmenter la fonctionnalité.
- Réduction de la durée de développement des projets pour offrir un accès à l'espace plus réactif, le délai d'approvisionnement des composants "haute fiabilité" étant couramment de un ou deux ans.

Néanmoins, un problème majeur auquel est confronté le concepteur d'architectures informatiques utilisant des composants commerciaux est la sensibilité de ces composants aux radiations, et en particulier aux ions lourds. Cet aspect qui était traité au niveau "composant" antérieurement (technologies tolérantes ou durcies), doit alors être résolu au niveau "architecture" et "système".

Les satellites, et donc leur électronique embarquée, sont soumis à un environnement. radiatif, composé de différentes particules (électrons, ions lourds, protons), que ne connaissent pas les systèmes utilisés au sol car ces particules sont filtrées par l'atmosphère.

L'origine de ces particules peut être classée en quatre composantes, qui peuvent être liées entre elles:
- le rayonnement cosmique d'origine en partie extra-galactique, en partie galactique, constitué d'ions extrêmement énergétiques,
- les ceintures de radiation autour de la terre constituées d'électrons et de protons piégés engendrés suite à des interactions entre l'atmosphère terrestre et des particules solaires,
- les éruptions solaires qui émettent des protons ou des ions lourds,
- le vent solaire généré par l'évaporation du plasma coronal, permettant l'échappement à l'attraction gravitationnelle du soleil de protons et d'ions de faible énergie.

Ces particules énergétiques, en percutant et traversant un composant électronique, lui transfèrent une partie de leur énergie qui va perturber le bon fonctionnement de celui-ci. Dans la présente description, on s'intéresse aux événements singuliers, créés par les ions lourds et les protons.

Ces événements singuliers correspondent à la génération d'erreurs de bits dans les cellules qui mémorisent des valeurs binaires i.e. les cellules mémoires, les registres et les bascules élémentaires : une valeur '0' mémorisée par une cellule mémoire va se transformer en une valeur '1' ou réciproquement. En règle générale, un seul bit est modifié par un ion lourd. Ces événements ne sont pas destructifs et l'on peut par la suite écrire une nouvelle donnée, qui est mémorisée sans erreur (hors apparition d'un autre événement singulier dans la même cellule). Les erreurs engendrées par ces phénomènes sont donc transitoires.

Pour pouvoir utiliser des composants commerciaux dans le domaine spatial sur une large échelle, une première solution possible est de sélectionner par test en radiation systématique des composants commerciaux, car certains peuvent être naturellement insensibles aux radiations (ou au moins à certains de leurs effets). Une telle solution, non seulement très coûteuse sur le plan de la sélection, n'est qu'un pis aller car ne permet pas forcément d'utiliser les grands standards de l'industrie dans le cas où ceux-ci se révéleraient sensibles aux radiations, ce qui est pourtant souhaitable. Une deuxième solution est de trouver une méthode permettant de tolérer les phénomènes engendrés par ces radiations, en particulier les erreurs transitoires, c'est-à-dire définir des architectures permettant de détecter les erreurs, puis de les corriger. La prise en compte des erreurs transitoires est alors transférée du niveau "composant" au niveau "architecture" et "système". Cette solution est préférée de l'invention car elle est économiquement plus rentable et permet de réduire les contraintes sur les choix de composants.

Le domaine de la tolérance aux pannes et aux fautes a fait l'objet de nombreux travaux de recherche, et certains mécanismes sont largement utilisés dans les systèmes sol, par exemple pour être tolérant à la panne d'un composant (e.g. systèmes sécuritaires).

De nombreux mécanismes de détection, isolation et recouvrement de fautes sont connus de l'homme de l'art. Certains mécanismes permettent simplement de détecter des erreurs, d'autres de les détecter puis de les masquer, voire de les corriger. Par ailleurs, ces mécanismes sont adaptés au traitement soit d'erreurs temporaires, soit de pannes définitives, soit des deux :
- Evitement de fautes : rafraîchissement systématique des données statiques avant leur utilisation effective (e.g. registres de configuration) ; autotests en dehors du fonctionnement nominal ("off-line") permettant de détecter une panne de composant avant que celui-ci ne soit utilisé.
- Codes détecteurs ou détecteurs / correcteurs d'erreurs qui s'appliquent aux mémoires, aux communications, et éventuellement à la logique (essentiellement dans la réalisation de circuits intégrés spécifiques (ASIC) ou de circuits logiques programmables par l'utilisateur (FPGA) dits "à contrôle intégré"). Des dispositifs de détection et correction d'erreurs (EDAC) sont systématiquement utilisés en spatial sur les plans mémoire. Une fonction de scrutation (relecture systématique de tout le plan mémoire) est associée à ces dispositifs et s'exécute en tâche de fond afin d'éviter l'accumulation d'erreurs dormantes qui, à terme, pourraient mettre en défaut les capacités de détection/correction du code.
- Duplication et comparaison, ou triplication et vote majoritaire, en anglais NMR ("N Modular Redundancy", redondance modulaire d'ordre N) ou le cas spécifique TMR ("Triple Modular Redundancy", triple redondance modulaire) : ces mécanismes permettent d'obtenir des architectures sûres lors d'une panne ("fail safe") qui ne génèrent pas de mauvaise commande mais qui s'arrêtent à la première faute (duplex), ou des architectures restant opérationnelles lors d'une panne ("fail operational") qui ont la capacité de masquer une erreur simple en temps réel et de poursuivre en restant sûres (triplex). Ce type d'architecture a été utilisé dans les études de calculateurs sûrs de fonctionnement pour les capsules spatiales européennes, tel que décrit dans le document référencé [4] en fin de description. On trouve également dans cette classe les architectures maître/contrôleur ("master/checker") où l'on duplique uniquement les microprocesseurs, les données générées par le "maître" étant vérifiées par le "contrôleur". Le microprocesseur ERC-32 de la société TEMIC/MHS intègre ce mécanisme, comme décrit dans le document référencé [5].
- Programmation multiple ("N-version programming") associée aux architectures NMR, qui permet de détecter également des erreurs de conception logicielle car chaque calculateur dispose d'une version de logiciel qui a été développé spécifiquement à partir d'une spécification commune.
- Redondance temporelle : il s'agit soit d'exécuter deux fois et de comparer, soit d'exécuter une fois, de charger un registre de commande puis de le relire afin de le comparer pour pouvoir le valider, tel le mécanisme "armer puis tirer" ("arm and fire") utilisé en spatial pour les commandes très critiques (par exemple déclenchement des éléments pyrotechniques).
- Contrôle du temps d'exécution : des chiens de gardes ("watchdog timer") sont utilisés dans tous les calculateurs spatiaux (un programme doit s'exécuter en un temps limité). De plus, des contrôles plus fins du temps d'exécution peuvent être incorporés dans le logiciel (contrôle de la durée d'une tâche, durée maximale autorisée pour obtenir la réponse d'un élément de communication, etc.). La remise à jour du chien de garde peut être conditionnée par un séquencement spécifique de clés (utilisé dans le domaine automobile).
- Vérification du flot de contrôle (e.g. contrôle du séquencement d'un microprocesseur) : les chiens de garde permettent un contrôle grossier (détection d'un plantage dur). Un contrôle fin du flot d'instructions est possible avec un processeur de surveillance ("watchdog processor") plus ou moins complexe. Le contrôle par analyse de signature est particulièrement efficace et peu demandant en électronique.
- Contrôle de la validité de l'adressage d'un microprocesseur à partir des droits d'accès par pages/segments.
- Contrôle de vraisemblance : ce principe est utilisé dans les systèmes de contrôle d'attitude et d'orbite de satellites où l'on compare soit les données de plusieurs types de capteurs pour détecter des incohérences éventuelles, soit une donnée par rapport à une référence estimée grâce à un filtre prédictif sur les valeurs précédentes, soit une donnée par rapport à une plage d'appartenance prédéfinie. Les méthodes dites tolérantes aux fautes basées sur le traitement algorithmique ("Algorithm Based Fault Tolerance") représentent une sous-classe des contrôles de vraisemblance, la vérification étant basée sur l'exécution d'un deuxième algorithme (par exemple l'algorithme inverse qui permet de retrouver les données initiales en partant des résultats obtenus si ceux-ci sont exempts d'erreurs).
- Contrôle structurel ou sémantique des données, nécessitant des structures de données relativement complexes.
- Concepts complémentaires de recouvrement d'erreurs, pour les mécanismes ne permettant pas de corriger les fautes, principalement les points de reprise : sauvegarde régulière de contextes et reprise à partir du dernier contexte sauvegardé. Le développement du calculateur COPRA (1980), comme décrit dans les documents référencés [1] à [3], est basé sur ce principe.
- Réinsertion de la ressource en faute par transfusion d'un contexte sain dans le calculateur fautif, afin de retrouver la capacité initiale de détection/correction de certaines architectures. Une réinsertion des chaînes en faute d'un calculateur peut être réalisée par l'opérateur pendant les phases de vol non critiques.

L'architecture, de type "maître-contrôleur", consiste à dupliquer uniquement le microprocesseur, à synchroniser les deux microprocesseurs instruction par instruction, et à comparer systématiquement leurs bus à chaque accès mémoire (instructions et données). Certains microprocesseurs intègrent directement sur la puce les mécanismes de synchronisation ainsi que les comparateurs de bus : par exemple les microprocesseurs IBM RH6000, Intel i960, Intel Pentium, TEMIC/MHS ERC-32 comme décrit dans le document référencé [5].

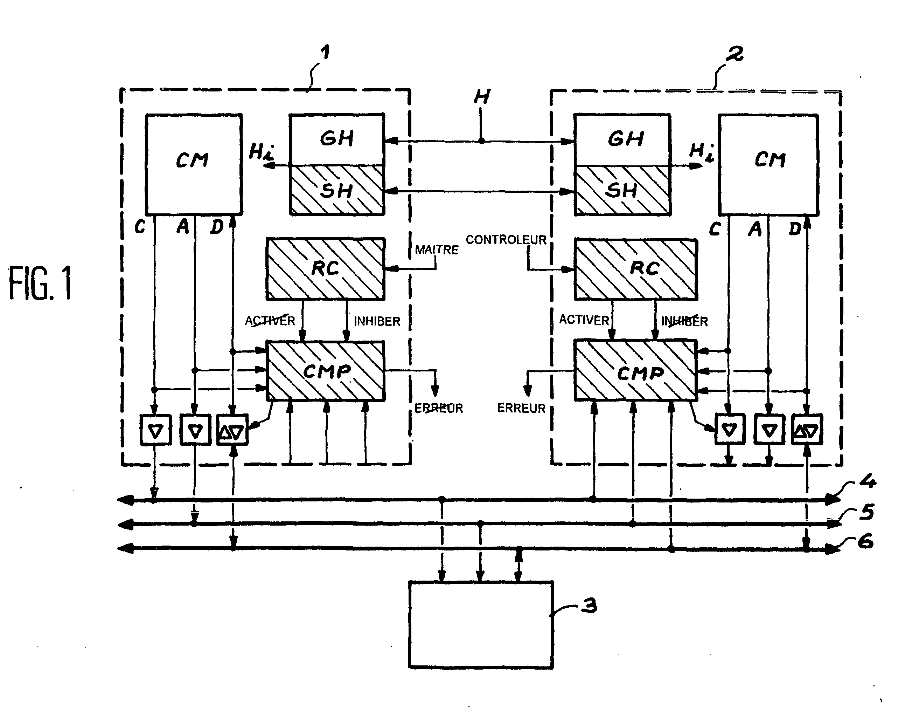

Ainsi le synoptique illustré sur la figure 1 comprend :
- un microprocesseur maître 1 comportant :
   - un coeur microprocesseur CM,
   - un générateur d'horloge GH,
   - un synchronisateur d'horloge SH,
   - un registre de configuration RC,
   - un comparateur de bus CMP,
   - des isolateurs mono ou bidirectionnels,
- un microprocesseur contrôleur 2 comprenant les mêmes éléments :
   - un coeur microprocesseur CM
   - un générateur d'horloge GH,
   - un synchronisateur d'horloge SH,
   - un registre de configuration RC,
   - un comparateur de bus CMP,
   - des isolateurs mono ou bidirectionnels,
- une mémoire 3.

Les signaux C, A et D sont respectivement des bus internes de contrôle, d'adresse et de données.

Les horloges H et Hi sont respectivement, et par exemple, de fréquences 10 MHz et 100 MHz.

Les bus 4, 5 et 6 sont respectivement les bus externes de contrôle, d'adresse et de données.

Sur la figure 1 les éléments hachurés sont spécifiques à l'architecture "maître-contrôleur", les signaux barrés sont des signaux inactifs ou inhibés.

Le microprocesseur intègre les éléments spécifiques à l'architecture "maître-contrôleur" suivants :
- un registre RC qui permet de configurer l'un des deux microprocesseurs en "maître", et l'autre en "contrôleur",
- une synchronisation des horloges internes Hi aux deux microprocesseurs,
- des comparateurs de bus CMP,
- une logique permettant de positionner les isolations de bus en entrée ou en sortie en fonction du type d'accès en lecture ou écriture, et en fonction également de la configuration en "maître" ou en "contrôleur" du microprocesseur.

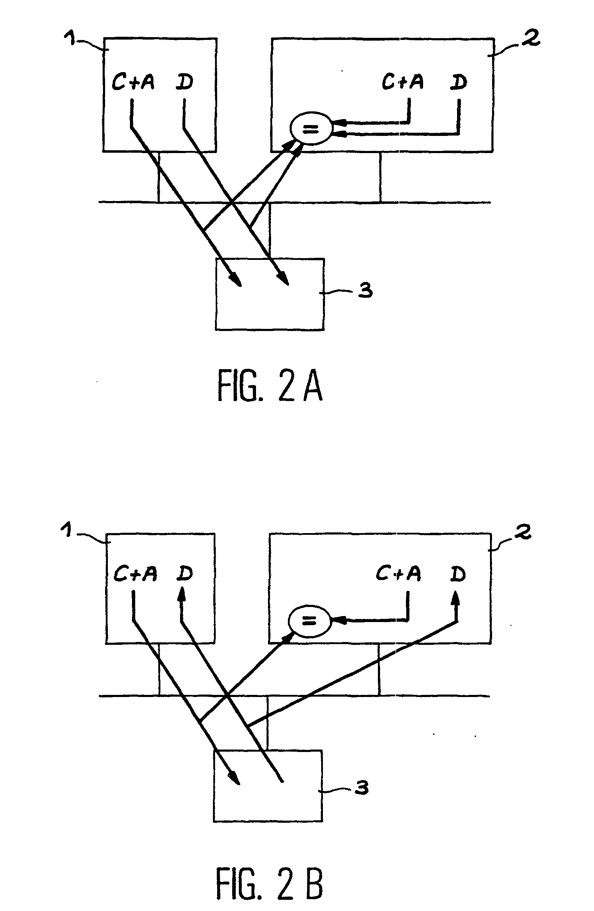

Comme illustré sur les figures 2A et 2B qui représentent respectivement la phase d'écriture et la phase de lecture de la mémoire, le fonctionnement est le suivant : les deux microprocesseurs 1 et 2 lisent et exécutent les mêmes instructions en même temps. Lors de chaque accès en écriture à la mémoire, les deux coeurs microprocesseurs CM génèrent une adresse et une donnée. Les isolations de bus du microprocesseur maître 1 sont orientées en sortie, alors que celles du microprocesseur contrôleur 2 sont orientées en entrée et les comparateurs de bus de ce dernier comparent bit à bit les valeurs fournies par les deux coeurs microprocesseurs CM. En cas d'incohérence, le microprocesseur contrôleur 2 génère un signal d'erreur. Lors de chaque accès en lecture à la mémoire, l'adresse fournie par le microprocesseur maître 1 est comparée par le microprocesseur contrôleur 2 à celle calculée par ce dernier ; en cas d'accord, les deux microprocesseurs 1 et 2 lisent la même donnée.

La difficulté de réaliser ce type d'architecture avec des microprocesseurs qui ne sont pas conçus pour, et qui n'intègrent donc pas les mécanismes décrits ci-dessus, réside dans les déphasages entre les horloges internes et externes. En effet, l'utilisateur fournit au microprocesseur une horloge à relativement basse fréquence (quelques dizaines de MHz), qui est multipliée en interne grâce à une boucle à verrouillage de phase, afin d'obtenir des fréquences plus élevées (quelques centaines de MHz). Deux microprocesseurs alimentés par la même horloge fonctionnent donc à la même fréquence mais sont déphasés l'un par rapport à l'autre. La valeur de ce déphasage est aléatoire et déterminée à la mise sous tension. La comparaison directe des bus est ainsi rendue impossible.

Dans l'architecture "maître-contrôleur", la mémoire n'est pas dupliquée. Dans l'architecture COPRA, la mémoire est dupliquée uniquement pour être tolérante aux pannes de composants, mais les deux unités centrales utilisent la même banque mémoire.

Un premier document de l'art connu, le brevet US 5 790 397, décrit deux unités de calcul CE ("Computer Element") travaillant en mode duplex, sachant qu'un processeur d'entrées/sorties effectue la macrosynchronisation des deux unités de calcul, la comparaison de leurs demandes d'entrées/sorties, et réalise ces entrées/sorties. Lorsque les deux unités de calcul veulent effectuer une entrée/sortie, elles envoient un message décrivant cette demande au processeur d'entrées/sorties. Celui-ci macro-synchronise les deux unités de calcul et compare le "checksum" des deux messages ; si le "checksum" n'est pas identique, l'unité de calcul fautive est inhibée ou mise hors tension.

Un second document de l'art connu, l'article intitulé "Transient fault tolerance in digital systems" de Janusz Sosnowski (8207, IEEE micro, 14 février 1994, N°1, Los Alamitas, CA, US), est un document permettant de comprendre les problèmes d'erreur transitoire dans les systèmes numériques, qui a pour objectif de permettre de sélectionner les techniques optimales pour masquer ou éliminer les effets de telles erreurs dans des systèmes développés.

Un troisième document de l'art connu, la demande de brevet EP-0 440 312, décrit une architecture duplex constituée d'un BPSMP ("Basic Processor Subsystem Modules Primary" ou module sous-système processeur basique primaire) et d'un BPSMS ("Basic Processor Subsystem Modules Secondary" ou module sous-système processeur basique secondaire) accédant à un sous-système mémoire constitué de différents blocs mémoire ("memory array"). Le microprocesseur de chaque module BPSM exécute les instructions mémorisées à l'intérieur du module lui-même, les deux modules étant synchronisés et comparés dès qu'ils accèdent à une donnée, les données étant mémorisées dans le sous-système mémoire.

L'objectif du procédé de l'invention est de traiter les erreurs transitoires dans les architectures informatiques, par exemple pour satellites, avec un taux de couverture très élevé afin de permettre l'utilisation de composants commerciaux dans des missions ayant de très fortes contraintes de disponibilité, ceci malgré leur sensibilité aux événements singuliers induits par des radiations.

### EXPOSE DE L'INVENTION

L'invention est définie par les revendications indépendantes.

La présente invention propose un système informatique tolérant aux erreurs transitoires, constitué d'une unité de traitement, qui comprend :
- au moins deux unités de traitement comportant chacune :
   - un microprocesseur
   - une mémoire protégée par un dispositif générant et contrôlant un code de détection et correction d'erreur,
   - un dispositif de surveillance des accès mémoire, comprenant :
      - des moyens de segmentation de la mémoire et de vérification des droits d'accès à chaque segment,
      - des moyens de protection spécifique des segments de la mémoire alloués à la sauvegarde du contexte de recouvrement,
      - des moyens de génération d'un signal de demande de correction au dispositif de gestion des unités de traitement et des entrées/sorties,
- un dispositif centralisé de gestion des unités de traitement et des entrées/sorties comportant :
   - des moyens de macro-synchronisation des unités de traitement,
   - des moyens de comparaison/vote des données générées par les unités de traitement,
   - des moyens (signal) de demande de correction émanant des dispositifs de surveillance des accès mémoire,
   - des moyens de prise de décision afin d'initialiser une phase de correction en cas d'erreur et des moyens (signal) permettant de transmettre simultanément cette demande à toutes les unités de traitement,
   - des moyens permettant d'effectuer les entrées/sorties,
- des liaisons reliant respectivement chaque unité de traitement au dispositif de gestion des unités de traitement et des entrées/sorties.

Avantageusement les tâches logicielles bénéficient d'une protection spécifique particulièrement sûre obtenue grâce au dispositif de surveillance des accès mémoire qui comprend des moyens permettant :
- de différencier les zones mémoire de chaque tâche,
- d'autoriser les accès à la zone mémoire affectée à la tâche courante,
- d'interdire les accès aux zones mémoires affectées aux autres tâches.

Avantageusement la mémorisation du contexte précédent des tâches logicielles bénéficie d'une protection spécifique particulièrement sûre obtenue grâce au dispositif de surveillance des accès mémoire qui comprend des moyens permettant
- de mémoriser ce contexte dans une mémoire de type RAM ("Random Access Memory") banalisée et centralisée de chaque unité de traitement sans nécessiter de dispositif de stockage spécifique,
- de différencier les zones mémoire affectées à la sauvegarde du contexte de chaque tâche,
- de gérer chaque zone servant à mémoriser ce contexte en une double banque "Old" et "New",
- de faire travailler en basculement les doubles banques "Old" et "New",
- de basculer les doubles banques en intervertissant simplement un jeu d'index "Old" et "New",
- d'autoriser en lecture les zones "Old" tout en les interdisant en écriture.

Ce dispositif peut être utilisé dans un système électronique embarqué et/ou dans le domaine spatial.

La présente invention propose également un procédé pour rendre tolérant aux fautes transitoires un système informatique constitué d'une unité de traitement, qui permet :
- d'exécuter simultanément sur au moins deux unités de traitement, de façon indépendante et asynchrone, des logiciels identiques, et répondant au fonctionnement suivant :
   - les erreurs transitoires affectant la mémoire des unités de traitement sont détectées et corrigées grâce à l'utilisation d'un code de détection et correction stocké en mémoire associé à une tâche logicielle de scrutation,
   - le bon fonctionnement du microprocesseur des unités de traitement est vérifié grâce à une segmentation de la mémoire associée à une surveillance des accès mémoire qui contrôle que lé microprocesseur dispose bien des droits d'accès au segment courant de la mémoire,
   - les segments mémoire alloués à la sauvegarde du contexte de recouvrement sont d'une grande sûreté grâce à une surveillance spécifique des accès mémoire, afin d'assurer qu'un microprocesseur dysfonctionnant ne puisse pas générer d'erreur dans ces zones critiques,
   - une demande de correction est transmise à la fonction de gestion des unités de traitement et des entrées/sorties en cas de violation des droits d'accès,
- de centraliser les opérations suivantes dans la fonction de gestion des unités de traitement et des entrées/sorties :
   - macro-synchronisation des différentes exécutions simultanées du logiciel,
   - comparaison/vote de toutes les données générées par les différentes exécutions du logiciel,
   - réception des demandes de correction émanant des fonctions de surveillance des accès mémoire suite à une détection d'erreur,
   - lorsqu'une erreur est détectée quelle que soit sa source, prise de décision afin d'initialiser une phase de correction et transmission de cette demande simultanément aux différentes exécutions du logiciel,
   - réalisation des entrées/sorties à la demande des logiciels,
- de réaliser l'interface entre les logiciels s'exécutant simultanément et la fonction de gestion des unités de traitement et des entrées/sorties.

Avantageusement il existe une zone de confinement d'erreurs entre tâches logicielles, c'est-à-dire qu'un microprocesseur dysfonctionnant peut perturber uniquement les variables de la tâche courante mais pas celles des autres tâches grâce à la gestion des segments mémoire.

Avantageusement, en cas de détection d'erreur, un recouvrement est possible, même s'il n'y a que deux unités de traitement, grâce au vote puis à la mémorisation du contexte précédent des tâches logicielles, et grâce à sa protection spécifique permettant de garantir qu'il est sain, ladite protection étant sûre car, même s'il est mémorisé dans une mémoire banalisée et centralisée de chaque unité de traitement, il y est mémorisé dans des zones gérées par le dispositif de surveillance des accès mémoire dans des zones mémoire spécifiques à chaque tâche en une double banque "Old" et "New" travaillant en basculement, le basculement de ces doubles banques s'effectuant en intervertissant simplement un jeu d'index "Old" et "New" afin que le contexte courant devienne ainsi le contexte précédent, les zones "Old" étant autorisées en lecture pour servir de données d'entrée aux tâches mais interdites en écriture et ainsi protégées même en cas de dysfonctionnement des microprocesseurs.

Avantageusement le recouvrement d'erreur basé sur une restauration du contexte précédent, est réalisé grâce au fait que l'index indiquant le contexte précédent jugé sain, c'est-à-dire exempt d'erreur, n'est pas changé, alors qu'il est basculé systématiquement en fin de période correspondant à la granularité de détection/recouvrement lorsqu'aucune erreur n'est détectée ; la restauration se limite ainsi à un "non basculement" de l'index indiquant le contexte courant/précédent qui est inhérent à la mise en mode veille et ne nécessite donc aucune action particulière.

Avantageusement la granularité de détection/recouvrement d'erreur est le cycle de contrôle/commande de chacune des tâches logicielles s'exécutant sur les unités de traitement, et dans lequel un recouvrement peut être réalisé uniquement sur la tâche logicielle fautive sans que l'exécution des autres tâches n'en soit affectée.

Avantageusement une détection d'erreur entraîne la mise en mode veille du microprocesseur c'est-à-dire l'inhibition de l'exécution de la période correspondant à la granularité de détection/recouvrement dans laquelle l'erreur a été détectée, engendrant un "trou" d'une période dans le cycle d'exécution usuel.

Avantageusement la comparaison/vote du contexte peut-être réalisée optionnellement de deux façons :
- soit, le logiciel applicatif demande explicitement une comparaison/vote groupée des données de contexte afin de les sauvegarder uniquement si elles sont jugées saines, c'est-à-dire exemptes d'erreur, cette demande étant réalisée systématiquement en fin de période correspondant à la granularité de détection /recouvrement ;
- soit, au fur et à mesure de leur calcul, le dispositif matériel de surveillance des accès mémoire de chaque unité de traitement détecte toute tentative d'écriture dans les zones du contexte, et la soumet systématiquement à une comparaison/vote pour vérifier sa véracité.

Dans ce procédé trois niveaux de zones de confinement des erreurs peuvent être définis : spatial, temporel et logiciel.

Ce procédé est indépendant du choix du microprocesseur en type (microprocesseur d'usage général, microprocesseur de traitement du signal, microprocesseur développé spécifiquement, etc.) et en référence (marque, famille, référence, etc.), et utilisable avec tous les microprocesseurs commerciaux.

Ce procédé peut être utilisé dans un système électronique embarqué et/ou dans le domaine spatial.

La minimisation des développements spécifiques au procédé de l'invention ainsi que le taux de couverture d'erreurs très élevé sont deux points attractifs de ce procédé. Dans l'hypothèse qui maximise la mise en oeuvre matérielle, ces développements sont essentiellement :
- Pour le logiciel :
   - regroupement éventuel des commandes en fin de tâches (ceci étant habituel dans les architectures duplex),
   - déclenchement éventuel du vote des données de contexte en fin de tâches,
   - gestion des clés du dispositif de surveillance des accès mémoire,
   - sauvegarde des données de contexte pour la correction.
   - légère mise à jour des logiciels existants, en fonction des caractéristiques décrites ci-dessus,
- Pour le matériel :
   - développement des fonctions surveillance des accès mémoire et gestion des processeurs et des entrées/sorties.

De plus on a les éléments suivants :
- l'utilisation de bibliothèques logicielles commerciales est possible sans aucune contrainte,
- les fonctions surveillance des accès mémoire et gestion des processeurs et des entrées/sorties sont génériques et réutilisables d'un projet à l'autre, hormis l'interface microprocesseur du dispositif de surveillance des accès mémoire qui doit être adapté en cas de changement de microprocesseur.

En résumé, les avantages du procédé de l'invention sont les suivants :
- développements matériels limités, et génériques donc réutilisables d'un projet à l'autre,
- développements logiciels très faibles,
- faible puissance de calcul consommée par la tolérance aux fautes,
- minimisation des coûts récurrents par rapport à d'autres architectures tolérantes aux fautes grâce à une duplication structurelle limitée,
- mode correction n'entraînant aucune charge du microprocesseur, donc pas de perturbation sur le fonctionnement temps réel de l'application (pouvant par exemple engendrer des difficultés de mise au point),
- trois niveaux de zones de confinement des erreurs : spatial, temporel et logiciel,
- détection inhérente des erreurs de l'exécutif temps réel, permettant d'utiliser un produit commercial sans surcoût pour la détection,
- taux de couverture d'erreur très élevé.

### BRÈVE DESCRIPTION DES DESSINS

Les figures 1 et 2 illustrent respectivement le synoptique et le fonctionnement d'une architecture "maître-contrôleur".
La figure 3 illustre le synoptique d'une architecture matérielle de référence.
La figure 4 illustre le diagramme temporel d'une architecture logicielle de référence.
La figure 5 illustre le séquencement de l'architecture de référence.
La figure 6 illustre l'architecture du système de l'invention.
La figure 7 illustre la zone de confinement d'erreurs au niveau spatial du système de l'invention.

### EXPOSÉ DÉTAILLÉ DE MODES DE RÉALISATION

Dans un certain nombre de missions spatiales, une très forte disponibilité du calculateur est nécessaire. Ceci est en particulier vrai dans le domaine des satellites de télécommunications où les pénalités pour indisponibilité sont excessivement élevées : quelques interruptions de transmission pendant les heures de grande écoute peuvent coûter en pénalités, à l'opérateur du satellite, l'équivalent de la location de ce canal pendant une année.

Par ailleurs, le taux d'événements singuliers dans un calculateur entièrement réalisé en composants commerciaux dépend bien sûr d'hypothèses comme le nombre de cellules mémoire (registres, etc.) et la valeur prise en compte pour la sensibilité d'une cellule unitaire. La fréquence des événements singuliers est très largement inférieure à la fréquence du cycle temps réel du calculateur, ce cycle correspondant à la granularité de détection/correction adoptée pour le procédé de l'invention, et peut être d'un ou de quelques événements par mois.

Les hypothèses maximales (i.e. pires-cas) retenues pour la définition d'une architecture tolérante aux erreurs transitoires selon l'invention sont les suivantes :
- Tous les composants de l'architecture de référence sont des composants commerciaux.
- Ces composants commerciaux ne sont pas caractérisés en tenue aux événements singuliers au préalable à leur utilisation : ils sont donc tous considérés comme étant sensibles.

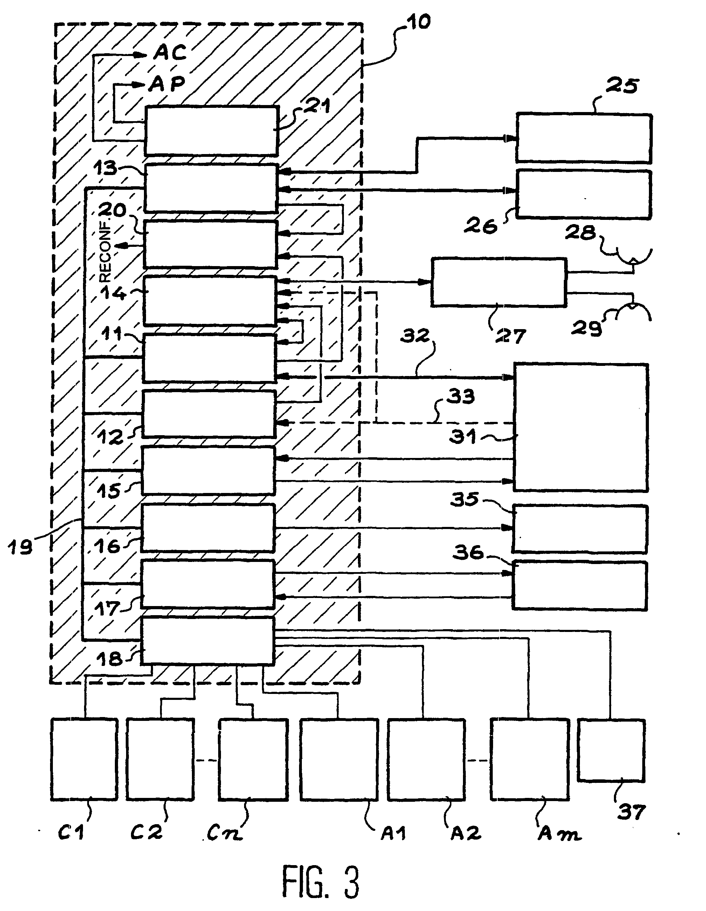

Comme base à la description du procédé de l'invention, on considère l'architecture de référence typique et générique d'un calculateur utilisé en spatial, illustrée sur la figure 3.

L'unité de gestion de bord 10, illustrée sur cette figure 3, comprend :
- une unité centrale 11,
- une mémoire de masse 12
- des interfaces puissance 13, charge utile 15, pyrotechnie 16, thermique 17, système de contrôle d'attitude et d'orbite 18,
   reliés par un bus de données 19,
- un interface télécommande-télémesure 14
- une électronique de surveillance et de reconfiguration 20,
- des convertisseurs continu-continu 21 délivrant des alimentations commutées AC et permanentes AP.

L'interface puissance 13 est reliée à un générateur solaire 25 et à une batterie 26.

L'interface télécommande-télémesure 14 est relié à un émetteur/récepteur, duplexeur 27 en liaison avec des antennes 28 et 29.

La charge utile 31 est reliée à l'unité centrale 11 par un bus avionique 32, à la mémoire de masse 12 ainsi qu'à l'interface télécommande/télémesure 14 par une liaison série haut débit 33, et à l'interface charge utile 15.

L'interface pyrotechnie 16 est relié à des systèmes déployables 35.

L'interface thermique 17 est reliée à des rechauffeurs, thermistances 36.

L'interface système de contrôle d'attitude et d'orbite 18 est relié à des capteurs C1, C2, ... Cn, à des actuateurs A1, A2 ... Am, et à un capteur de pression des réservoirs 37.

Une telle architecture est donc constituée de différents modules de traitement (module unité centrale) ou d'entrées/sorties (modules d'acquisition, modules de commande). Les modules d'entrées/sorties (ou d'acquisitions/commandes) intègrent l'électronique de bas niveau (convertisseur analogique / numérique ou numérique / analogique, multiplexeurs de voies numériques ou analogiques, relais, etc.).

Ces modules peuvent indifféremment être des cartes reliées par un bus fond-de-panier, ou des boîtiers complets reliés par un bus avionique. Dans les deux cas, l'interface au bus est réalisée par un coupleur de bus (CB) maître sur le module Unité Centrale, et par des coupleurs de bus abonnés sur les autres modules.

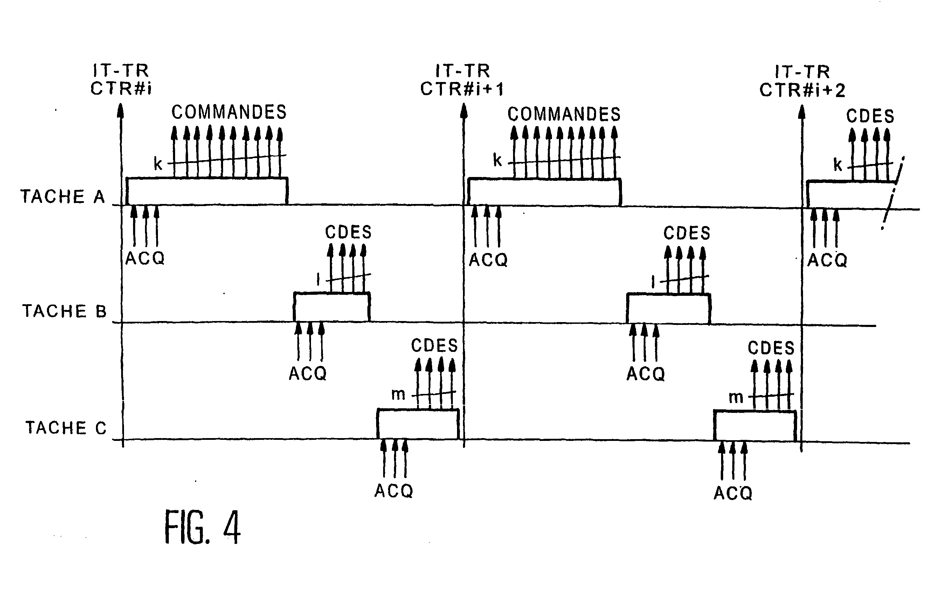

L'architecture logicielle de référence, comme illustrée sur la figure 4, est constituée de tâches de traitement (par exemple : tâche du système de contrôle d'attitude et d'orbite, tâche contrôle thermique, tâche horloge temps réel, tâche gestion bord, etc.), chaque tâche générant des résultats qui doivent sortir du calculateur (commandes ou cdes), ces résultats étant générés (i.e. sortis du calculateur) au fur et à mesure de leur calcul. Les acquisitions (ou Acq) sont groupées en début de cycle temps réel pour raison de cohérence temporelle (système de contrôle d'attitude et d'orbite par exemple).

Sur la figure 4 les tâches A, B et C sont représentées à la même fréquence pour des raisons de clarté de la description.

L'activité de ces tâches est rythmée par un cycle temps réel déclenché par une interruption temps réel IT-TR cyclique. Ce cycle permet de démarrer de façon cyclique certaines tâches, qui travaillent soit à la fréquence du cycle temps réel, soit à une sous-fréquence. D'autres tâches sont asynchrones, initialisées sur événements.

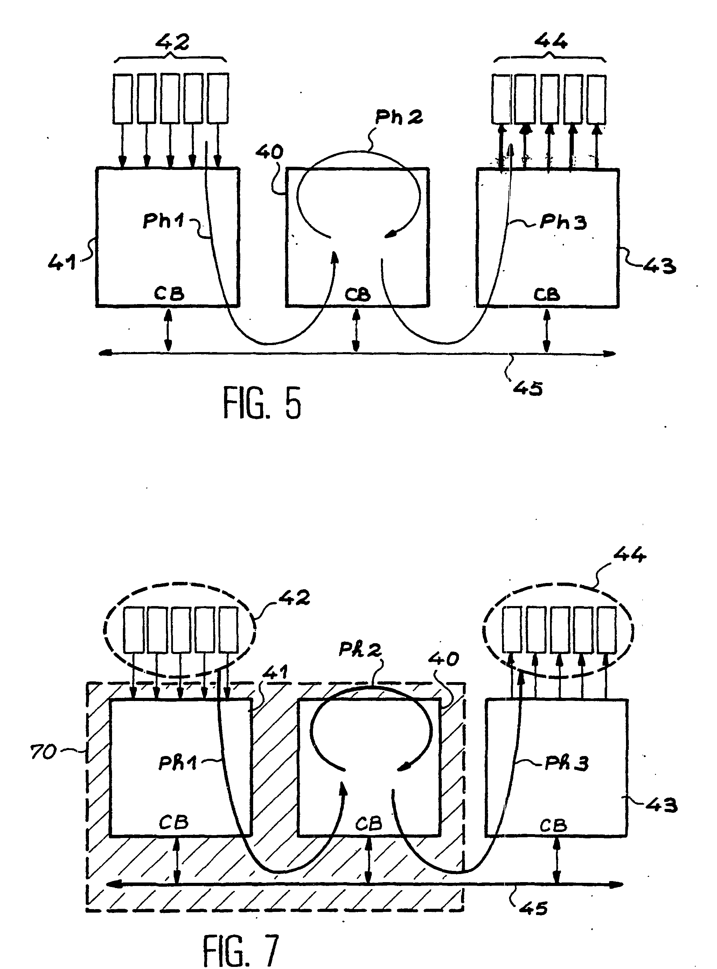

Une représentation faisant à la fois apparaître les architectures de référence matérielle et logicielle est fournie à la figure 5. Sur cette figure sont représentées l'unité centrale 40, l'électronique d'acquisition 41 reliée à des capteurs 42, et l'électronique de commande 43 reliée à des actuateurs 44, ces deux électroniques 41 et 43, ainsi que l'unité centrale étant reliées à un bus de données 45.

Le séquencement des trois phases principales Ph1, Ph2 et Ph3, que sont l'acquisition de données, leur traitement, et la génération de commandes, mettent en jeu les trois parties distinctes de l'électronique 40, 41, 43, les phases Ph2 et Ph3 étant imbriquées.

Le procédé de l'invention a une vocation générique, et peut être utilisé dans tout type de calculateur soumis à des contraintes d'erreurs transitoires, quelle que soit l'origine des ces erreurs (radiations cosmiques, impulsions électromagnétiques, etc.).

Par conséquent, sa description s'appuie sur une architecture matérielle et logicielle de référence typique ne représentant aucune application particulière. Le coté matériel de cette architecture ne se base que sur des blocs fonctionnels hors réalisation matérielle (hors choix de composants, hors choix des types d'intégration, etc.), et ne tient donc pas compte de la spécificité de composants particuliers (microprocesseur, etc.) et de leurs capacités éventuelles dans le domaine de la détection/correction d'erreur. Le procédé de l'invention est donc autosuffisant. Cependant, l'utilisation d'éventuels mécanismes de tolérance aux fautes intégrés aux composants retenus pour une application donnée ne peut qu'améliorer le taux de couverture d'erreurs par rapport au procédé de l'invention seul.

Une détermination des signatures d'erreurs potentielles de l'architecture de référence soumise à des événements singuliers a été réalisée. Elle a permis de classer les erreurs en deux groupes principaux :
- les erreurs de données,
- les erreurs de séquencement, qui peuvent être également partagées en deux sous-classes :
   - "plantage doux" : branchement erroné, mais le microprocesseur retombe en phase avec les instructions, et poursuit un séquencement des instructions plus ou moins erratique ;
   - "plantage dur": le microprocesseur n'est plus opérationnel : le microprocesseur ne reste pas en phase avec les instructions, le microprocesseur charge le registre d'instructions avec des données, le pointeur de pile est perturbé, il y a blocage du séquencement des instructions, attente d'un événement impossible, boucle infinie, etc..

Ces deux classes se subdivisent elles-mêmes en différentes sous-classes, dont la plus importante concerne les erreurs d'adresses.

La distinction entre plantage "doux" et "dur" est importante : autant un mécanisme matériel externe au microprocesseur est généralement nécessaire à la détection des plantages "durs" (e.g. un chien de garde), autant un mécanisme logiciel peut être suffisant pour détecter un plantage "doux" puisque, dans ce dernier cas, le microprocesseur continue à exécuter du code, même si c'est de façon erratique.

Par ailleurs, les plantages microprocesseur constituent une classe d'erreurs critiques, car un " microprocesseur fou" est capable d'actions pouvant avoir des conséquences catastrophiques pour une mission ; il est donc important de s'attacher à les détecter, dans un délai court, et/ou de réaliser des zones de confinement d'erreurs afin de minimiser la probabilité de mauvaises commandes suite à une erreur non détectée.

Un mécanisme, ou un ensemble de mécanismes, qui détecterait directement tout événement appartenant aux deux classes d'erreurs ci-dessus, présenterait une complétude de détection. Si une détection directe de ces deux classes n'est pas suffisamment exhaustive, il peut alors être intéressant d'utiliser des mécanismes spécifiquement adaptés à une ou plusieurs sous-classes, en particulier les erreurs d'adresses, afin d'augmenter le taux de couverture global de la solution retenue.

### CHOIX DE LA GRANULARITE DE DETECTION/CORRECTION

De façon globale, la granularité proposée dans l'invention pour la détection/correction est le cycle temps réel de base du calculateur, par exemple le cycle de la tâche contrôle d'attitude et d'orbite d'un calculateur plate-forme de satellite

Plus précisément, la granularité est le cycle de contrôle/commande de chacune des tâches logicielles s'exécutant sur les coeurs unité de traitement, mais le terme "cycle temps réel" sera conservé par simplification.

En effet dans le procédé de l'invention comme dans un duplex structurel "classique" complet, l'objectif est de laisser le calculateur travailler sans surveillance, et de voter uniquement les données qui doivent sortir du calculateur (les commandes) ou qui servent à la correction / recouvrement d'erreurs (le contexte).

Le choix du cycle temps réel pour la granularité est très avantageux :
- A cette fréquence on accède en acquisition ou en commande à une majorité de capteurs / actuateurs ;
- En fin de cycle temps réel on dispose de données "actives" en nombre relativement restreint (pas de multiples données intermédiaires, ni de variables locales en cours d'utilisation) :
   - pour la détection, on limite ainsi les données de type "contexte" qui doivent être votées ;
   - pour la correction, on dispose d'un contexte de reprise simple et bien localisé.

La recherche d'une granularité très fine, en particulier pour la correction, révèle rapidement la complexité induite par la définition des données nécessaires et suffisantes au contexte de reprise, et par l'ajout de votes intermédiaires qui complexifient le fonctionnement global.

De façon plus précise, la granularité de la détection/correction pour une tâche donnée est la fréquence de cette même tâche, puisque le vote se fait en fin de tâche. Par conséquent, si l'on considère une tâche à 10 Hz et une tâche à 1 Hz, la granularité est de 10 Hz pour la première et de 1 Hz pour la seconde. Le raisonnement est identique, mais pour raison de clarté, on conserve dans la suite, la notion de "granularité par cycle temps réel" plutôt que "par tâche".

### DESCRIPTION GLOBALE

De façon générale, l'architecture de type "duplex" (deux chaînes physiques identiques en parallèle, exécutant le même logiciel, avec comparaison des sorties) est particulièrement attractive car elle permet de détecter toutes les erreurs sans exception, quel que soit leur type (erreur de données, d'adresses, de séquencement, de configuration, etc.). L'inconvénient d'une telle solution réside dans la lourdeur de la redondance structurelle : on multiplie par plus de deux la masse, le volume, la consommation, et également le coût récurrent du calculateur, ce qui est inacceptable pour de nombreuses applications.

Etant donné que la grande majorité des difficultés liées à la détection/correction d'erreurs est localisée dans le microprocesseur, une architecture de type "maître-contrôleur" est très attractive. Cependant, pour pouvoir utiliser des microprocesseurs qui n'intègrent pas directement sur la puce les mécanismes autorisant la micro-synchronisation du maître avec le contrôleur, et la comparaison de leur bus, la recherche d'une autre solution est nécessaire.

Pour bénéficier de l'efficacité du duplex, tout en minimisant la redondance structurelle et, ainsi, s'approcher de la compacité d'une architecture de type "maître-contrôleur", le procédé de l'invention consiste à dupliquer seulement le microprocesseur et sa mémoire (on parle de "coeur d'unité de traitement") et à les macro-synchroniser ; les données résultantes de chaque coeur de l'unité de traitement (e.g. commandes, contexte) sont votées avant utilisation par un composant externe à ceux-ci.

Une correction consiste, suite à une détection, à inhiber le cycle temps réel en cours, et à recharger un contexte sain pour effectuer une reprise ; la reprise étant en fait l'exécution nominale du cycle suivant à partir du contexte rechargé : tout se passe comme s'il y avait un "trou" d'un cycle temps réel (il s'agit d'une "poursuite").

Le procédé de l'invention permet un taux de couverture d'erreurs élevé vis à vis des erreurs transitoires dans le coeur unité de traitement puisque ce type d'erreurs amène immanquablement une différence entre les deux coeurs unité de traitement.

Le procédé de l'invention permet également de détecter les pannes permanentes dans l'un des coeurs unité de traitement, mais bien évidemment sans pouvoir les corriger, celles-ci devant être traitées de façon usuelle.

Toutefois le procédé de l'invention ne protège pas les actions en aval du vote, c'est-à-dire les transferts des données vers l'électronique de commande (i.e. le bus de données), ainsi que l'électronique de commande elle-même. Ainsi, les commandes critiques qui nécessitent d'être exemptes d'erreurs doivent être protégées par des mécanismes classiques : codage des données, circuit à détection d'erreur, instrumentation de l'électronique de commande, etc.

La mise en oeuvre du procédé de l'invention fait appel à deux composants spécifiques : un dispositif de surveillance des accès mémoire, et un dispositif de gestion des processeurs et des entrées/sorties. Par conception, ceux-ci sont protégés des événements singuliers par des mécanismes classiques : triplication des registres critiques, etc.

### DESCRIPTION DETAILLEE

### Constituants principaux

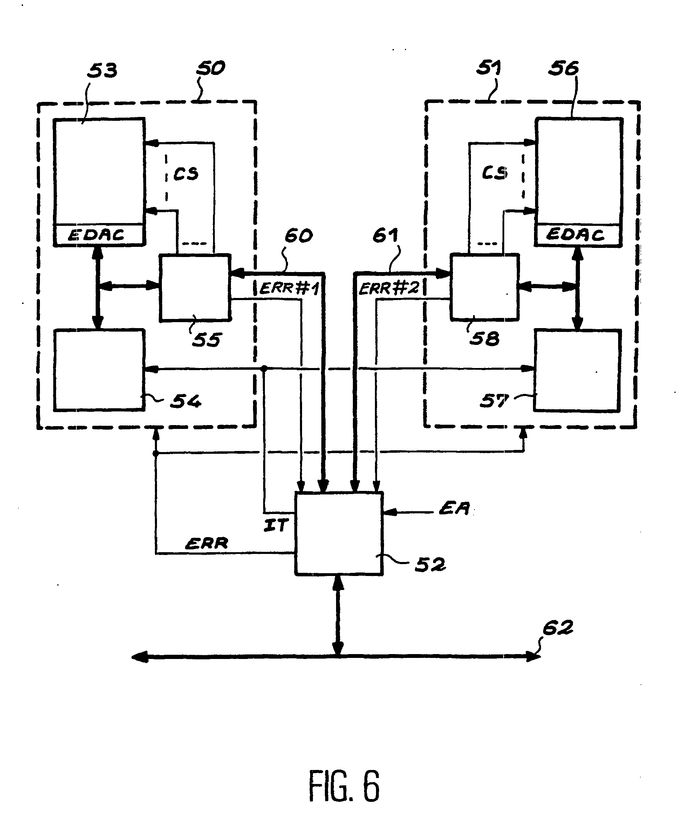

La figure 6 présente l'architecture matérielle du procédé de l'invention.

Celle-ci comprend un premier et un second coeur d'unité de traitement 50 et 51, qui comportent les mêmes éléments, et un dispositif de gestion des processeurs et des entrées/sorties 52.

Le premier coeur d'unité de traitement comporte .
- une mémoire 53 protégée par code de détection et correction d'erreurs (EDAC),
- un microprocesseur 54,
- un dispositif de surveillance des accès mémoire 55.

Le second coeur d'unité de traitement 51 comporte :
- une mémoire 56 protégée par code de détection et correction d'erreurs (EDAC),
- un microprocesseur 57,
- un dispositif de surveillance des accès mémoire 58.

Chaque dispositif de surveillance des accès mémoire 55, 58 génère à la mémoire correspondance 53, 56 des signaux de sélection CS ("chip select").

Le dispositif de gestion des processeurs et des entrées/sorties 52 est relié à chaque dispositif de surveillance des accès mémoire par un bus 60, 61. Il est. également relié à un bus d'entrée/sortie 62. Il reçoit des signaux ERR#1 et ERR#2 en provenance des dispositifs de surveillance des accès mémoire 55 et 58, et un signal EA (événements asynchrones) en provenance de l'extérieur. I1 délivre un signal IT (interruption) aux deux microprocesseurs 54 et 57, et un signal ERR (erreur) aux deux coeurs d'unité de traitement 50 et 51.

Le procédé de l'invention s'articule ainsi autour :
- d'une duplication structurelle 50, 51 du Coeur Unité de Traitement ;
- d'un composant externe 52 aux coeurs unités de traitement réalisant principalement trois fonctions :
   - la macro-synchronisation des coeurs unités de traitement 50 et 51,
   - le vote des données permettant la détection des erreurs ;
   - la gestion des entrées/sorties ;
- de plans mémoire (53, 56) des coeurs unités de traitement protégés des événements singuliers par code détecteur et correcteur d'erreurs (EDAC) ;
- d'une segmentation de la mémoire associée à un dispositif matériel de surveillance des accès mémoire (55, 58) contrôlant les droits d'accès qui, avec le code détecteur et correcteur d'erreurs, permet de sauvegarder de façon sûre le contexte de reprise dans les plans mémoire banalisés (53, 56) et de détecter des erreurs d'adressage;
- d'une gestion particulière du contexte de reprise;
- d'une correction en cas d'erreur;
- de trois niveaux de zones de confinement des erreurs.

Un "vote majoritaire" prend en compte trois entrées au moins, et il est plus rigoureux d'utiliser le terme "comparateur" lorsqu'il. y a deux entrées seulement, comme c'est le cas pour le procédé de l'invention à deux coeurs unités de traitement illustré sur la figure 6. Dans la présente description on utilise cependant le terme générique "voteur", qui est plus parlant.

### Duplication structurelle

Dans le procédé de l'invention, la .duplication structurelle est limitée au coeur de l'unité de traitement, c'est à dire aux éléments suivants:
- le microprocesseur (54, 57),
- la mémoire (53, 56) du microprocesseur (mémoire morte et vive) protégée des événements singuliers par détection et corrections d'erreurs (EDAC),
- un dispositif matériel externe de surveillance des accès mémoire (55, 58), intégrant la logique de décodage des adresses et de surveillance des accès mémoire,
contrairement à l'architecture "maître-contrôleur" où seul le microprocesseur est dupliqué, et contrairement au duplex structurel classique où toute la carte unité centrale, voire tout le calculateur, sont dupliqués.

Cette duplication structurelle des coeurs unité de traitement permet d'utiliser un exécutif temps réel non modifié et des logiciels applicatifs identiques s'exécutant simultanément sur les coeurs unité de traitement et s'arrêtant aux mêmes points dans le flot d'instruction (macro-synchronisation) pour demander une entrée/sortie (acquisition/commande) identique ou un vote sur des données identiques (par exemple de contexte).

### Synchronisation /vote/ entrées-sorties

Le dispositif matériel 52 externe aux coeurs des unités de traitement 50 et 51, de gestion des processeurs et des entrées/sorties, intègre les fonctions suivantes :
- macro-synchronisation des coeurs de traitement,
- vote,
- initialisation d'une correction suite à la détection d'une erreur,
- accès aux mémoires des coeurs unité de traitement en mode "accès direct mémoire" (Direct Memory Access),
- gestion des entrées/sorties et interface entre les bus des unités de traitement 60 et 61 de chacun des deux coeurs unité de traitement et un bus 62 d'entrée/sortie ;
- contrôleur d'interruptions (IT).

Chacun des coeurs unité de traitement 50 et 51 communique avec le dispositif de gestion des processeurs et des entrées/sorties 52 par l'intermédiaire des bus d'unité de traitement 60, 61. Les entrées/sorties sont gérées par le dispositif de gestion des processeurs et des entrées/sorties 52 à travers le bus d'entrée/sortie 62.

### Macro-synchronisation

Chacun des coeurs unités de traitement 50, 51 travaille de façon indépendante l'un de l'autre. Dès que l'un des coeurs unités de traitement 50 ou 51 souhaite effectuer une entrée/sortie, c'est-à-dire soit lire une acquisition soit générer une commande, le fonctionnement est le suivant :
- ledit coeur unité de traitement envoie au dispositif de gestion des processeurs et des entrées/sorties 52 un message décrivant sa demande par l'intermédiaire du bus unité de traitement correspondant 60 ou 61 (le message inclut une adresse pour une acquisition ou un couple adresse/donnée pour une commande) ;
- le dispositif de gestion des processeurs et des entrées/sorties 52 attend alors un message sur son autre bus unité de traitement.
- Si le deuxième bus unité de traitement est muet à l'expiration d'un délai donné, une erreur est décrétée. Sinon, le dispositif de gestion des processeurs et des entrées/sorties compare les deux messages ; s'ils sont strictement identiques (longueur et contenu), alors le dispositif de gestion des processeurs et des entrées/sorties 52 effectue le transfert demandé par l'intermédiaire du bus d'entrée/sortie 62.
- Une fois ce transfert effectué, la donnée dans le cas d'une acquisition est écrite directement en accès direct mémoire en mémoire de chacun des coeurs unités de traitement par le dispositif de gestion des processeurs et des entrées/sorties, puis le dispositif de gestion des processeurs et des entrées/sorties acquitte les deux coeurs unités de traitement.

Chacun des coeurs unités de traitement peut alors reprendre son traitement de façon indépendante :
le procédé de l'invention utilise donc une macro-synchronisation limitée aux moments de vote (entrées/sorties, contexte) contrairement à
l'architecture "maître-contrôleur" où les microprocesseurs sont micro-synchronisés instruction par instruction.

Le nombre de macro-synchronisations peut être réduit en regroupant la génération des commandes, ainsi que le vote des données de contexte, en fin de cycle temps réel contrairement à la structure du logiciel de référence.

### Vote

Le vote réalisé par le dispositif de gestion des processeurs et des entrées/sorties 52 peut être simple (type vote bit-à-bit) ou plus complexe (type vote par rapport à des seuils) suivant la mise en oeuvre retenue. Dans la deuxième hypothèse, le seuil est un paramètre transmis au voteur par les coeurs unités de traitement à chaque entrée/sortie ; les seuils sont eux-mêmes votés bit-à-bit avant utilisation.

Si les votes complexes sont en nombre restreint, ils peuvent être confiés au logiciel applicatif afin de limiter la complexité du voteur matériel (par exemple, échange des données complexes à voter entre coeurs unités de traitement par l'intermédiaire de l'accès direct mémoire du dispositif de gestion des processeurs et des entrées/sorties, puis vote par le dispositif de gestion des processeurs et des entrées/sorties du résultat du vote de chacun des coeurs unités de traitement) .

### Initialisation d'une correction

La détection élémentaire d'erreurs est répartie entre les dispositifs de surveillance des accès mémoire 55 et 58 inclus dans les coeurs unités de traitement 50 et 51 (contrôle des droits d'accès mémoire), et le dispositif de gestion des processeurs et des entrées/sorties 52 à l'extérieur des coeurs unités de traitement (vote).

Par contre, la décision globale de considérer qu'une erreur vient d'être détectée est centralisée dans le dispositif de gestion des processeurs et des entrées/sorties 52 : lorsqu'un dispositif de surveillance des accès mémoire a détecté une erreur, il l'indique au dispositif de gestion des processeurs et des entrées/sorties (ERR#1 ou ERR#2) qui génère alors un signal d'erreur unique ERR vers les deux coeurs unités de traitement afin qu'une phase de correction soit initialisée par chacun d'eux.

### Contrôleur d'accès direct mémoire

Le dispositif de gestion des processeurs et des entrées/sorties 52 intègre un contrôleur d'accès direct mémoire pour charger en mémoire des coeurs unité de traitement les données issues d'acquisitions, et optionnellement pour accéder aux données de contexte à voter. Ce contrôleur d'accès direct mémoire peut également être utilisé dans le cas d'un bus unité de traitement et/ou bus d'entrée/sortie, à transfert de blocs.

### Gestion des entrées/sorties

Le dispositif de gestion des processeurs et des entrées/sorties 52 réalise l'interface entre les bus unité de traitement 60, 61 de chacun des deux coeurs unité de traitement 50, 51 et un bus unique d'entrée/sortie 62, et gère les entrées/sorties pour le compte des coeurs unité de traitement lorsque ceux-ci fournissent une demande identique.

### Contrôleur d'interruptions

Le dispositif de gestion des processeurs et des entrées/sorties 52 reçoit tous les événements asynchrones EA externes et génère les interruptions IT simultanément vers les deux coeurs unité de traitement 50 et 51. Celles-ci sont mémorisées dans le dispositif de gestion des processeurs et des entrées/sorties jusqu'à l'acquittement par les deux coeurs unité de traitement. Chaque microprocesseur peut ainsi s'assurer qu'il ne s'agit pas d'une interruption parasite générée par un événement singulier dans sa propre logique interne d'interruption.

### Protection des plans mémoire

Les plans mémoires sont classiquement protégés contre les événements singuliers par code correcteur (EDAC) et tâche de scrutation (relecture en tâche de fond de tout le plan mémoire pour détecter et corriger les erreurs dormantes afin d'éviter l'accumulation de bits erronés dans le même mot qui pourraient alors ne plus être détectées et/ou corrigées par le code) .

Cette caractéristique est importante pour le procédé de l'invention. En effet, il est essentiel d'obtenir une fiabilisation de la mémorisation des données de contexte de reprise, pour s'assurer de l'efficacité de la correction.

Le procédé de l'invention s'appuie donc sur un plan mémoire doublement protégé :
- sur un plan mémoire intrinsèquement fiable vis à vis des événements singuliers grâce à l'utilisation d'un dispositif de détection et correction d'erreur (EDAC) ;
- sur un plan mémoire fiable vis à vis des écritures incorrectes suite à une erreur d'adresse, d'instruction, un plantage du microprocesseur, etc., grâce à l'utilisation d'une surveillance des droits d'accès (dispositifs de surveillance des accès mémoire).

### Dispositif de surveillance des accès mémoire

Chaque dispositif de surveillance des accès mémoire 55 ou 58 est un dispositif matériel dérivé des classiques unités de protection mémoire par blocs. La mémoire est partitionnée en segments, et ce dispositif permet de vérifier que le microprocesseur cherchant à accéder à un segment, en possède bien le droit d'accès.

Le dispositif de surveillance des accès mémoire permet de détecter une grande partie des erreurs d'adresses. Il permet, en particulier, de détecter très rapidement, i.e. avec un délai faible, de nombreux cas de plantage du microprocesseur. En effet, suite à un plantage "doux", un microprocesseur peut fréquemment sortir de la zone d'adresses autorisées. Ainsi, le dispositif de surveillance des accès mémoire permet de détecter très vite les erreurs de séquencement du microprocesseur, qui représentent une catégorie d'erreurs critiques.

Le dispositif de surveillance des accès mémoire dispose de certaines caractéristiques spécifiques :
- la taille des segments est quelconque, et définie en fonction de l'application ;
- certains segments ont une signification et un fonctionnement spécifiques au procédé de l'invention, en particulier ceux qui servent à sauvegarder le contexte de reprise;
- l'autorisation d'accès se fait en programmant des clés mémorisées dans des registres internes au dispositif de surveillance des accès mémoire, la définition de ces clés étant spécifique au procédé de l'invention ;
- la définition des clés est d'un niveau "logiciel applicatif" et non d'un niveau "matériel" ;
- l'autorisation d'accès a un segment est donnée en fonction d'une combinaison logique de tout ou partie des clés, les combinaisons logiques pour chacun des segments étant spécifiques au procédé de l'invention ;
- Le dispositif de surveillance des accès mémoire peut déclencher des mécanismes spécifiques lors d'une lecture ou d'une écriture d'un segment particulier ;
- une zone est affectée par tâche applicative du logiciel afin de disposer d'un confinement logiciel entre tâche,
- une zone de mémorisation du contexte est affectée par tâche afin de le protéger de façon spécifique avec un fonctionnement en basculement "Old"/"New".

La liste des clés intégrées dans le dispositif de surveillance des accès mémoire est fournie ci-dessous :
- Clé d'interdiction d'accès en écriture à la zone mémorisant le code afin d'éviter une corruption de celui-ci. Dans le cas inverse, il faudrait systématiquement voter le code et le recharger chaque fois qu'une erreur est détectée, ce qui serait particulièrement contraignant. Cette clé permet d'autoriser l'écriture de la mémoire uniquement lors de l'initialisation du calculateur, lorsque le code en mémoire morte doit être transféré en mémoire vive.
- Clé indiquant quelle est la tâche courante, et autorisant le microprocesseur à n'accéder qu'à la zone mémoire contenant les données de la tâche du logiciel en cours d'exécution. Cette clé permet une étanchéification aux erreurs d'une tâche par rapport aux autres.
- Clé indiquant quelle est, parmi les jeux de zones "Old" / "New" travaillant en basculement, les zones "Old" et les zones "New", sachant que les zones "Old" sont interdites en écriture.

### Fonctionnement du contexte de reprise

Les zones mémoire affectées à la sauvegarde du contexte de recouvrement ou de reprise sont différenciées pour chaque tâche afin de limiter le recouvrement d'erreur à la seule tâche fautive, c'est-à-dire la tache courante au moment de la détection d'une erreur ; ainsi un recouvrement peut être réalisé uniquement sur la tâche logicielle fautive sans que l'exécution des autres tâches n'en soit affectée.

Le fonctionnement du contexte de reprise fait appel à quatre phases distinctes : la mémorisation, le vote, la sauvegarde et la restauration.

Pour un mode de correction de type "recouvrement", les données constituant le contexte de reprise doivent être spécifiquement protégées de façon à ce que la reprise puisse se faire à partir d'un contexte sain à coup sûr.

Pour cela, les données sont mémorisées dans des zones spécifiques de la mémoire des coeurs unités de traitement (53, 56), chaque zone étant gérée par le dispositif de surveillance des accès mémoire en une double banque "Old" et "New" travaillant en basculement (en "flip-flop").

Plusieurs méthodes sont utilisables pour en effectuer le vote :
- En fin de cycle temps réel, les zones "New" sont votées de façon groupée par le dispositif de gestion des processeurs et des entrées/sorties 52, à la demande du logiciel applicatif, afin de les sauvegarder uniquement si elles sont jugées saines. Cette méthode présente l'avantage de réduire le nombre de macro-synchronisations nécessaires au vote des données de contexte.
- Toute tentative d'écriture dans l'une des zones de contexte, au fur et à mesure du cycle temps réel, est détectée par le dispositif de surveillance des accès mémoire et systématiquement transmise au dispositif de gestion des processeurs et des entrées/sorties pour vote. Si le vote est correct, la donnée est effectivement rangée en mémoire des coeurs unité de traitement par le dispositif de surveillance des accès mémoire.

En fin de cycle temps réel, et après le vote pour la première méthode, les zones de contexte courant sont sauvegardées et basculées en intervertissant les index "Old" et "New" : le contexte courant est devenu le contexte précédent.

La fonction "restauration de contexte", activée lors d'une correction d'erreur, est réalisée grâce au fait que l'index indiquant le contexte précédent jugé sain n'est pas changé, alors qu'il est basculé en temps normal lorsqu'aucune erreur n'est détectée ; ce "non basculement" étant inhérent à l'inhibition de l'exécution du cycle temps réel dans lequel l'erreur est détectée.

### Recouvrement ou correction

Différents modes de correction, plus ou moins complexes, peuvent être mis en oeuvre suivant le type de mission à réaliser :
- réinitialisation système, c'est à dire réinitialisation à chaud, réinitialisation à froid ou passage sur un calculateur redondant s'il en existe un,
- recouvrement arrière,
- recouvrement avant, c'est à dire poursuite "pure" ou poursuite à partir d'un contexte sauvegardé.

On choisit préférentiellement la dernière solution pour des systèmes complexes de contrôle-commande, solution utilisée dans ladite description du pour décrire le procédé de l'invention.

La correction s'exécute suivant le séquencement suivant :
- lorsqu'une erreur est détectée, le cycle temps réel courant (numéro N) est inhibé, aucune commande n'est générée : le microprocesseur passe en mode veille ("standby") en attendant le cycle temps réel suivant ;
- le cycle temps réel suivant N+1 s'exécute non pas à partir du contexte N (qui n'est pas sûr), mais du contexte précédent N-1, et des acquisitions du cycle courant N+1.

En fait, on ne rejoue pas le cycle temps réel fautif. I1 ne s'agit pas d'une reprise à proprement parler. On se contente simplement d'inhiber le cycle temps réel courant et de restaurer le contexte du cycle précédent. En cas d'erreur, le microprocesseur ne génère pas les commandes du cycle temps réel courant puisqu'il s'est mis en veille : tout se passe comme s'il y avait un "trou" d'un cycle temps réel.

La correction ne nécessite aucune action spécifique : le microprocesseur s'étant mis en veille après une détection, il ne peut exécuter (ou finaliser l'exécution) du vote en fin de cycle temps réel courant. Cela entraîne naturellement une non-permutation des contextes "Old" et "New" qui se fait en fin de vote lorsque l'état du système peut être décrété sain. La restauration, ou le rechargement, des contextes suite à une détection d'erreur est donc intrinsèque au fonctionnement retenu pour le procédé de l'invention.

Lors d'une reprise, on utilise couramment le terme "rechargement du contexte". En définitive, le procédé ne nécessite pas de rechargement à proprement parler, puisque simplement on ne commute pas les index "Old" et "New" des zones de contexte suite à une détection d'erreur : en fait, la reprise consiste "à ne rien faire", à se mettre en veille, le reste découlant automatiquement du fonctionnement nominal.

Par ailleurs, le recouvrement ou correction peut être limité à la tâche courante grâce au confinement entre tâches et à la différentiation des contextes de reprise pour chaque tâche ; dans ce cas, seule la tâche fautive est avortée et perd un cycle temps réel dans le cas d'un recouvrement par poursuite, l'exécution des autres tâches n'étant en rien affectée.

Une seule tentative de reprise est effectuée. Si elle infructueuse, c'est par exemple que l'erreur a réussi à se propager jusqu'au contexte de reprise qui n'est alors plus sain, ou qu'il y a une panne permanente. Une réinitialisation complète du calculateur, ou le passage sur un calculateur de secours en redondance s'il en existe un, est alors nécessaire.

### Zones de confinement

Trois zones de confinement sont définies dans le procédé de l'invention.

La première zone correspond à un confinement spatial. Cette zone majeure de confinement des erreurs 70 est constituée de l'électronique d'acquisition 41 et de l'unité centrale 40, comme illustré sur la figure 7. Sur cette figure, on utilise les mêmes références que celles de la figure 5. L'électronique d'acquisition est protégée par des mécanismes classiques (par exemple réplication). Ainsi, si une erreur perturbe les acquisitions, ou le traitement (le temps de calcul alloué au traitement étant de loin le plus important, c'est statistiquement dans la phase de traitement qu'il y a le plus d'erreurs), cette erreur ne peut pas être générée vers l'électronique de commande. Les erreurs survenant suite à un événement singulier dans l'électronique d'acquisition ou dans l'unité centrale ne peuvent donc pas engendrer de mauvaises commandes du satellite ; elles ne perturbent pas la mission.

La deuxième zone correspond à un confinement temporel des erreurs au niveau d'un cycle temps réel (le cycle temps réel qui suit l'apparition d'une erreur est correct), puisque la correction est basée sur une granularité d'un cycle temps réel.

La troisième zone correspond à un confinement logiciel des erreurs au niveau des tâches logicielles (pas de propagation d'erreurs d'une tâche à l'autre) grâce au dispositif de surveillance des accès mémoire.

### Taux de couverture d'erreurs du procédé

Le taux de couverture d'erreurs pour un mécanisme de tolérance aux fautes représente le pourcentage d'erreurs qu'il est capable de traiter au regard de l'ensemble des erreurs susceptibles de se produire.

Par ailleurs, dans le procédé de l'invention, étant donné que la zone de confinement spatial est étanche aux erreurs, il ne peut y avoir de commande erronée générée à l'électronique de commande.

Le taux de couverture d'erreurs, dans le procédé de l'invention, devrait se trouver dans la gamme des taux de couverture usuels de duplex structurel, soit supérieur à 99 %.

### Variantes

Des variantes du procédé de l'invention sont possibles. Certaines ont déjà été mentionnées :
- Regroupement de la génération des commandes, et du vote des données de contexte, en fin de cycle temps réel pour réduire le nombre de macro-synchronisations.
- Vote simple (type vote bit à bit) ou plus complexe (type vote par rapport à des seuils).
- Bus unité de traitement et/ou bus d'entrée/sortie à transfert de blocs ou non.
- Mode de correction.
- Intégration des mécanismes logiciels du procédé dé l'invention dans l'exécutif temps réel afin de maximiser le taux de correction.

Par ailleurs, il est possible de répartir les fonctions suivantes du dispositif de gestion des processeurs et des entrées/sorties dans les coeurs unité de traitement, et de les réaliser en logiciel au prix d'une réduction du taux de couverture d'erreurs :
- la macro-synchronisation,
- le vote,
- la gestion des entrées/sorties.

Le dispositif de gestion des processeurs et des entrées/sorties 52 de synchronisation/vote/entrées-sorties peut également être supprimé et ses fonctions réparties en matériel et/ou en logiciel dans les coeurs unité de traitement.

Enfin, il est possible de tripliquer le coeur unité de traitement, éventuellement en simplifiant ou supprimant le dispositif de surveillance des accès mémoire, le dispositif de gestion des processeurs et des entrées/sorties étant connecté aux trois coeurs unité de traitement et réalisant un vote majoritaire. Les erreurs sont masquées en temps réel. Un contexte mémoire sain doit être transféré en mémoire coeur de l'unité de traitement fautif si le dispositif de surveillance des accès mémoire a été supprimé ou si l'erreur concerne l'exécutif temps réel. Ce transfert peut être fortement réduit si le dispositif de surveillance des accès mémoire est conservé avec la fonction "segmentation par tâche".

### REFERENCES

**[1]** "COPRA: a modular family of reconfigurable computers" de C. Méraud, et P. Lloret, (Proceedings of the IEEE National Aerospace and Electronics Conference, NAECON' 78, 16-18 mai 1978, Dayton, Ohio, USA).
**[2]** "Calculateur à organisation parallèle reconfigurable automatiquement", de F. Browaeys, J-J. Chevreul, et C. Méraud, (Second International Conference on Reliability and Maintainability, 21-23 septembre 1980, Trégastel, France).
**[3]** "Une ligne de calculateurs reconfigurables ultra-fiables destinés aux applications aérospatiales embarquées", de C. Méraud et F. Browaeys (AGARD Conference Proceedings n° 272 "Advances in Guidance and Control Systems Using Digital Techniques", Guidance and Control Panel Symposium, 8-11 mai 1979, Ottawa, Canada).
**[4]** "Fault-tolerant computer for the Automated Transfer Vehicule", de R. Roques, A. Corrégé, et C. Boléat, (28th Fault Tolerance Computing Symposium, 23-25 juin 1998, Munich, Allemagne).
**[5]** "Concurrent error-detection and modular fault-tolerance in an 32-bit processing core for embedded space flight applications", de J. Gaisler, (24th Fault Tolerance Computing Symposium, 1994).

## Revendications

1. Système informatique adapté au traitement de différents types de fautes, avec un taux de couverture d'erreur donné, constitué par
• au moins une duplication de l'unité de traitement comprenant chacune :
- un microprocesseur,
- une mémoire,
• un dispositif (52) centralisé de gestion des unités de traitement et des entrées/sorties comportant :
- des moyens de macro-synchronisation des unités de traitement ; la macro-synchronisation, correspondant au fait que le dit dispositif, une fois reçu un message de la part de l'une des unités de traitement qui exécutent toutes le même logiciel de façon asynchrone, attend pendant un délai maximum donné la réception des messages équivalents provenant des autres unités de traitement, chaque unité de traitement s'étant arrêtée au même point dans le logiciel pour transmettre le dit message ; si les dits messages sont différents, les dits moyens décrètent une erreur ; si les dits messages sont identiques, les dits moyens exécutent ce message puis acquittent les dites unités de traitement,
- des moyens de comparaison/vote des données générées par les unités de traitement,
- des moyens de prise de décision afin d'initialiser une phase de correction pour différents cas d'erreur et des moyens permettant de transmettre simultanément cette demande de correction à toutes les unités de traitement,
- des moyens permettant d'effectuer des entrées/sorties,
• des liaisons reliant respectivement chaque unité de traitement au dispositif de gestion des unités de traitement et des entrées/sorties,
**caractérisé en ce que** le dit système informatique est adapté au traitement d' erreurs transitoires avec un taux de couverture supérieur à 99%, le dit système informatique étant tel que :
• la dite duplication des unités de traitement est strictement limitée aux coeurs unités de traitement (50, 51) comportant chacun :
- la dite mémoire (53, 56) en outre protégée par un dispositif générant et contrôlant un code de détection et correction d'erreur,
- des dispositifs (55, 58) de surveillance des accès mémoire intégrant des moyens de se protéger contre les' événements singuliers comprenant :
- des moyens de segmentation de la mémoire et de vérification des droits d'accès à chaque segment (53, 56),
- des moyens de protection spécifique des segments de la mémoire (53, 56) alloués à la sauvegarde du contexte de recouvrement,
- des moyens de génération d'un signal de demande de correction au dispositif (52) de gestion des coeurs unités de traitement et des entrées/sorties,
• le dit dispositif (52) centralisé de gestion des unités de traitement et des entrées/sorties qui intègre des moyens de se protéger contre les événements singuliers, comporte en outre :
- des moyens de réception des dites demandes de correction émanant des dispositifs (55, 58) de surveillance des accès mémoire,
- des moyens d'accès directs à la mémoire des coeurs unités de traitement.

2. Système selon la revendication 1, dans lequel le dispositif de surveillance des accès mémoire (55, 58) comprend des moyens permettant :
- de différencier les zones mémoire de chaque tâche,
- d'autoriser les accès à la zone mémoire affectée à la tâche courante,
- d'interdire les accès aux zones mémoires affectées aux autres tâches.

3. Système selon la revendication 1, dans lequel le dispositif de surveillance des accès mémoire (55, 58) comprend des moyens permettant :
- de mémoriser ce contexte dans une mémoire (53, 56) banalisée et centralisée de chaque coeur unité de traitement (50, 51) sans nécessiter de dispositif de stockage spécifique,
- de différencier les zones mémoire affectées à la sauvegarde du contexte de chaque tâche,
- de gérer chaque zone servant à mémoriser ce contexte en une double banque "Old" et "New",
- de faire travailler en basculement les doubles banques "Old" et "New",
- de basculer les doubles banques en intervertissant simplement un jeu d'index "Old" et "New",
- d'autoriser en lecture les zones "Old" tout en les interdisant en écriture.

4. Système selon l'une quelconque des revendications précédentes, qui est utilisé dans un système électronique embarqué et/ou dans le domaine spatial.

5. Procédé pour rendre tolérant à différents types de fautes, avec un taux de couverture d'erreur donné, un système informatique qui permette :
• d'exécuter simultanément sur au moins deux unités de traitement, de façon indépendante et asynchrone, des logiciels identiques,
• de centraliser les opérations suivantes dans la fonction de gestion des unités de traitement et des entrées/sorties :
- macro-synchronisation des différentes exécutions simultanées du logiciel, la macro-synchronisation, correspondant au fait que le dit dispositif, une fois reçu un message de la part de l'une des unités de traitement qui exécutent toutes le même logiciel de façon asynchrone, attend pendant un délai maximum donné la réception des messages équivalents provenant des autres unités de traitement, chaque unité de traitement s'étant arrêtée au même point dans le logiciel pour transmettre le dit message ; si les dits messages sont différents, les dits moyens décrètent une erreur ; si les dits messages sont identiques, les dits moyens exécutent ce message puis acquittent les dites unités de traitement,
- comparaison / vote de toutes les données générées par les différentes exécutions du logiciel, .
- lorsqu'une erreur est détectée quelle que soit sa source, prise de décision afin d'initialiser une phase de correction et transmission simultanément aux différentes exécutions du logiciel, d'une demande de correction,
- réalisation des entrées/sorties à la demande des logiciels,
• de réaliser l'interface entre les logiciels s'exécutant simultanément et la fonction de gestion des unités de traitement et des entrées/sorties,
**caractérisé en ce que** le dit procédé est adapté en outre au traitement d' erreurs transitoires avec un taux de couverture supérieur à 99%, le dit procédé permettant en outre :
• d'exécuter simultanément sur au moins deux unités strictement limitées aux coeurs unités de traitement, de façon indépendante et asynchrone, des logiciels identiques, ce qui correspond à la dite exécution simultanée sur au moins deux coeurs unités de traitement mais répond en outre au fonctionnement suivant :
- les erreurs transitoires affectant la mémoire (53, 56) des coeurs unités de traitement (50, 51) sont détectées et corrigées grâce à l'utilisation d'un code de détection et correction stocké en mémoire associé à une tâche logicielle de scrutation,
- le bon fonctionnement du microprocesseur respectif (54, 57) des coeurs unités de traitement (50, 51) est vérifié grâce à une segmentation de la mémoire associée à une surveillance des accès mémoire qui contrôle que le microprocesseur dispose bien des droits d'accès au segment courant de la mémoire (53, 56), cette surveillance des accès mémoire étant elle-même protégée contre les événements singuliers de la façon suivante :
- les segments mémoire alloués à la sauvegarde du contexte de recouvrement sont d'une grande sûreté grâce à une surveillance spécifique des accès mémoire, afin d'assurer qu'un microprocesseur (54, 57) disfonctionnant ne puisse pas générer d'erreur dans ces zones critiques,
- une demande de correction est transmise à la fonction (52) de gestion des unités de traitement et des entrées/sorties en cas de violation des droits d'accès,
• de centraliser les opérations suivantes dans la fonction de gestion des unités de traitement et des entrées/sorties, ce qui correspond à la dite centralisation des opérations dans la fonction de gestion des unités de traitement et des entrées/sorties mais inclut en outre une protection aux événements singuliers de la fonction de gestion des unités de traitement et des entrées/sorties et inclut en outre les fonctions suivantes :
- réception des demandes de correction émanant des fonctions de surveillance des accès mémoire suite à une détection d'erreur,
- lorsqu'une d'erreur est détecté, quelle que soit sa source, prise de décision afin d'initialiser une phase de correction et transmission d'une demande de correction simultanément aux différentes exécutions du logiciel,
- accès directs à la mémoire des coeurs unités de traitement.

6. Procédé selon la revendication 5, dans lequel existe une zone de confinement d'erreurs entre tâches logicielles, de manière à ce qu'un microprocesseur (54, 57) disfonctionnant ne puisse perturber que les variables de la tâche courante mais pas celles des autres tâches.

7. Procédé selon la revendication 5, dans lequel, en cas de détection d'erreur, un recouvrement est possible grâce au vote puis à la mémorisation du contexte précédent des tâches logicielles, et grâce à sa protection spécifique permettant de garantir qu'il est sain, ce contexte étant mémorisé dans une mémoire (53, 56) banalisée et centralisée de chaque coeur unité de traitement (50, 51), dans des zones mémoire spécifiques à chaque tâche en une double banque "Old" et "New" travaillant en basculement, le basculement de ces doubles banques s'effectuant en intervertissant simplement un jeu d'index "Old" et "New" afin que le contexte: courant devienne ainsi le contexte précédent, les zones "Old" étant autorisées en lecture pour servir de données d'entrée aux tâches mais interdites en écriture et ainsi protégées même en cas de dysfonctionnement des microprocesseurs (54, 57)

8. Procédé selon la revendication 7, dans lequel le recouvrement d'erreur basé sur une restauration du contexte précédent; est réalisé grâce au fait que l'index indiquant le contexte précédent jugé sain n'est pas changé, alors qu'il est basculé systématiquement en fin de période correspondant à la granularité de détection/recouvrement lorsque aucune erreur n'est détectée.

9. Procédé selon la revendication 5, dans lequel la granularité de détection/recouvrement d'erreur est le cycle de contrôle/commande de chacune des tâches logicielles s'exécutant sur les coeurs unités de traitement (50, 51), et dans lequel un recouvrement peut être réalisé uniquement sur la tâche logicielle fautive sans que l'exécution des autres tâches n'en soit affectée.

10. Procédé selon la revendication 5, dans lequel une détection d'erreur entraîne la mise en mode veille du microprocesseur, engendrant un "trou" d'une période dans le cycle d'exécution usuel.

11. Procédé selon la revendication 5, dans lequel une comparaison/vote du contexte peut-être réalisée optionnellement de deux façons :
- soit, le logiciel applicatif demande explicitement une comparaison/vote groupé des données de contexte afin de les sauvegarder uniquement si elles sont jugées saines, cette demande étant réalisée systématiquement en fin de période correspondant à la granularité de détection/recouvrement ;
- soit, au fur.et à mesure de leur calcul, le dispositif matériel de surveillance des accès mémoire (55, 58) de chaque coeur unité de traitement (50, 51) détecte toute tentative d'écriture dans les zones du contexte, et la soumet systématiquement à une comparaison/vote pour vérifier sa véracité.

12. Procédé selon la revendication 5, dans lequel trois niveaux de zones de confinement des erreurs sont définis : spatial, temporel et logiciel.

13. Procédé selon l'une quelconque des revendications 5 à 12, qui est utilisé dans un système électronique embarqué et/ou dans le domaine spatial.

## Patentansprüche

1. Computersystem, welches zum Verarbeiten von verschiedenen Arten von Fehlern mit einer gegebenen Fehlerabdeckungsrate ausgestaltet ist, gebildet durch:
• mindestens eine Vervielfältigung der Verarbeitungseinheit, jeweils umfassend:
- einen Mikroprozessor,
- einen Speicher,
• eine zentralisierte Vorrichtung (52) zum Verwalten der Verarbeitungseinheiten und von Eingängen/Ausgängen, umfassend:
- Makro-Synchronisationsmittel der Verarbeitungseinheiten; wobei die Makro-Synchronisation der Tatsache entspricht, dass die Vorrichtung, sobald sie eine Meldung von einer der Verarbeitungseinheiten, welche alle die gleiche Software in asynchroner Weise ausführen, empfangen hat, für eine durch das Empfangen von aus den anderen Verarbeitungseinheiten hervorgehenden äquivalenten Meldungen gegebene maximale Verzögerung wartet, wobei jede Verarbeitungseinheit an dem gleichen Punkt in der Software angehalten ist, um die Meldung zu übermitteln; wobei, wenn die Meldungen verschieden sind, die Mittel einen Fehler verfügen; wobei, wenn die Meldungen identisch sind, die Mittel diese Meldung ausführen, worauf sie die Verarbeitungseinheiten freigeben,
- Vergleichs-/Abstimmungsmittel von durch die Verarbeitungseinheiten erzeugten Daten,
- Entscheidungsfassungsmittel, um für verschiedene Fehlerfälle eine Korrekturphase einzuleiten, und Mittel, welche es ermöglichen, gleichzeitig diese Korrekturanforderung an alle Verarbeitungseinheiten zu übermitteln,
- Mittel, welche es ermöglichen, Eingaben/Ausgaben zu bewerkstelligen,
• Verbindungen, welche entsprechend jede Verarbeitungseinheit mit der Verwaltuingsvorrichtung der Verarbeitungseinheiten und der Eingänge/Ausgänge verbinden,
**dadurch gekennzeichnet,**
**dass** das Computersystem zum Verarbeiten von vorübergehenden Fehlern mit einer Abdeckungsrate größer als 99% ausgestaltet ist, wobei das Computersystem derartig ist, dass:
• die Vervielfältigung der Verarbeitungseinheiten strikt auf Kernverarbeitungseinheiten (50, 51) begrenzt ist, welche jeweils umfassen:
- den Speicher (53, 56), welcher zudem durch eine Vorrichtung geschützt ist, die einen Code zur Fehlererfassung und -korrektur erzeugt und überprüft,
- Vorrichtungen (55, 58) zur Überwachung von Speicherzugriffen, welche Mittel einschließen, um sich gegen Einzelereignisse zu schützen, umfassend:
- Mittel zur Segmentierung des Speichers und Überprüfung von Zugriffsrechten auf jedes Segment (53, 56),
- Mittel zum spezifischen Schutz der Segmente des Speichers (53, 56), welche zur Sicherung des Wiederherstellungskontexts zugewiesen sind,
- Mittel zum Erzeugen eines Korrekturanforderungssignals an die Verwaltungsvorrichtung (52) der Kemverarbeitungseinheiten und der Eingänge/Ausgänge,
• die zentralisierte Verwaltungsvorrichtung (52) der Verarbeitungseinheiten und der Eingänge/Ausgänge, welche die Mittel, um sich gegen Einzelereignisse zu schützen, einschließt, zudem umfasst:
- Mittel zum Empfang der Korrekturanforderungen, weiche von den Vorrichtungen (55, 58) zur Überwachung von Speicherzugriffen ausgehen,
- Mittel zum direkten Zugriff auf den Speicher der Kemverarbeitungseinheiten.

2. System nach Anspruch 1, wobei die Vorrichtung zur Überwachung von Speicherzugriffen (55, 58) Mittel umfasst, welche es ermöglichen:
- die Speicherbereiche jedes Tasks zu differenzieren,
- den Zugriff auf den Speicherbereich, welcher bei dem gültigen Task verwendet wird, zu erlauben,
- den Zugriff auf Speicherbereiche, welche von anderen Tasks verwendet werden, zu verbieten.

3. System nach Anspruch 1, wobei die Vorrichtung zum Überwachen von Speicherzugriffen (55, 58) Mittel umfasst, welche es ermöglichen:
- diesen Kontext in einem gemeinsamen und zentralisierten Speicher (53, 56) jeder Kemverarbeitungseinheit (50, 51) zu speichern, ohne dass eine spezifische Speichervorrichtung erforderlich ist,
- die Speicherbereiche, welche bei der Sicherung des Kontexts jedes Tasks verwendet werden, zu differenzieren,
- jeden Bereich, welcher zum Speichern dieses Kontexts dient, in einer Doppelbank "Old" und "New" zu verwalten,
- zu veranlassen dass die Doppelbanken "Old" und "New" durch Umschalten wirken,
- Umschalten der Doppelbanken, indem einfach ein Indexsatz "Old" und "New" vertauscht wird,
- die Bereiche "Old" beim Lesen zu erlauben, während sie beim Schreiben verboten sind.

4. System nach einem beliebigen der vorhergehenden Ansprüche, welches in einem elektronischen Bordsystem und/oder im Raumfahrtbereich verwendet wird.

5. Verfahren, um ein Computersystem gegenüber verschiedenen Arten von Fehlern mit einer gegebenen Fehlerabdeckungsrate unempfindlich zu machen, welches es ermöglicht:
• gleichzeitig auf mindestens zwei Verarbeitungseinheiten in unabhängiger und asynchroner Weise identische Software auszuführen,
• die folgenden Vorgänge in der Verwaltungsfunktion der Verarbeitungseinheiten und von Eingängen/Ausgängen zu zentralisieren:
- Makro-Synchronisation von verschiedenen gleichzeitigen Ausführungen der Software, wobei die Makro-Synchronisation der Tatsache entspricht, dass die Vorrichtung, sobald sie eine Meldung von einer der Verarbeitungseinheiten, welche alle die gleiche Software in asynchroner Weise ausführen, empfängt, während einer durch das Empfangen von aus den anderen Verarbeitungseinheiten hervorgehenden äquivalenten Meldungen gegebenen maximalen Verzögerung wartet, wobei jede Verarbeitungseinheit an demselben Punkt in der Software angehalten ist, um die Meldung zu übermitteln; wobei, wenn die Meldungen verschieden sind, die Mittel einen Fehler verfügen; wobei, wenn die Meldungen identisch sind, die Mittel die Meldung ausführen, worauf sie die Verarbeitungseinheiten freigeben,
- Vergleichen/Abstimmen von allen durch die verschiedenen Ausführungen der Software erzeugten Daten,
- wenn ein Fehler erfasst wird, ganz gleich, was sein Ursprung ist, Fassen der Entscheidung, eine Korrekturphase einzuleiten und gleichzeitiges Übermitteln einer Korrekturanforderung an die verschiedenen Ausführungen der Software,
- Herbeiführen von Eingaben/Ausgaben auf Anforderung der Softwareprogramme,
• Realisieren der Schnittstelle zwischen den Softwareprogrammen, welche gleichzeitig ablaufen, und der Verwaltungsfunktion der Verarbeitungseinheiten und der Eingänge/Ausgänge,
**dadurch gekennzeichnet,**
**dass** das Verfahren zudem zum Verarbeiten von vorübergehenden Fehlern mit einer Abdeckungsrate größer als 99% ausgestaltet ist, wobei das Verfahren es zudem ermöglicht:
• gleichzeitig auf mindestens zwei strikt auf Kemverarbeitungseinheiten begrenzten Einheiten in unabhängiger und asynchroner Weise identische Softwareprogramme auszuführen, was der gleichzeitigen Ausführung auf mindestens zwei Kemverarbeitungseinheiten entspricht, aber zudem folgender Funktionsweise entspricht:
- die vorübergehenden Fehler, welche sich auf den Speicher (53, 56) der Kernverarbeitungseinheiten (50, 51) auswirken, werden durch die Verwendung eines Erfassungs- und Korrekturcodes erfasst und korrigiert, welcher in einem Speicher gespeichert ist, welcher einem Überprüfungssoftwaretask zugeordnet ist,
- die ordnungsgemäße Funktionsweise des entsprechenden Mikroprozessors (54, 57) der Kemverarbeitungseinheiten (50, 51) wird durch eine Segmentierung des Speichers, welcher einer Überwachung von Speicherzugriffen zugeordnet ist, welche überprüft, dass der Mikroprozessor wirklich über Zugriffsrechte auf das gültige Segment des Speichers (53, 56) verfügt, überprüft, wobei diese Überwachung von Speicherzugriffen in der folgenden Weise selbst gegen Einzelereignisse geschützt ist:
- die der Sicherung des Wiederherstellungskontexts zugewiesenen Speichersegmente sind durch eine spezifische Überwachung von Speicherzugriffen, um zu gewährleisten, dass ein fehlerhaft arbeitender Mikroprozessor (54, 57) nicht Fehler in diesen kritischen Bereichen erzeugen kann, von einer hohen Sicherheit,
- eine Korrekturanforderung wird im Fall einer Zugriffsrechtsverletzung an die Verwaltungsfunktion (52) der Verarbeitungseinheiten und der Eingänge/Ausgänge übermittelt,
• die folgenden Vorgänge in der Verwaltungsfunktion der Verarbeitungseinheiten und der Eingänge/Ausgänge zu zentralisieren, was der Zentralisierung der Vorgänge in der Verwaltungsfunktion der Verarbeitungseinheiten und der Eingänge/Ausgänge entspricht, jedoch zudem einen Schutz gegenüber Einzelereignissen der Verwaltungsfunktion der Verarbeitungseinheiten und der Eingänge/Ausgänge beinhaltet und zudem die folgenden Funktionen beinhaltet:
- Empfangen von Korrekturanforderungen, welche von den Überwachungsfunktionen der Speicherzugriffe in Folge einer Fehlererfassung ausgehen,
- wenn ein Fehler erfasst wird, ganz gleich, was sein Ursprung ist, Fassen der Entscheidung, eine Korrekturphase einzuleiten und gleichzeitiges Übermitteln einer Korrekturanforderung an verschiedene Ausführungen der Software,
- direkte Zugriffe auf den Speicher der Kemverarbeitungseinheiten.

6. Verfahren nach Anspruch 5, wobei ein Fehlereingrenzungsbereich zwischen Softwaretasks besteht, so dass ein fehlerhaft arbeitender Mikroprozessor (54, 57) nur die Variablen des gültigen Tasks stören kann, jedoch nicht diejenigen der anderen Tasks.

7. Verfahren nach Anspruch 5, wobei im Fall einer Fehlererfassung durch die Abstimmung, dann das Speichern des vorhergehenden Kontexts der Softwaretasks und durch seinen spezifischen Schutz, welcher es ermöglicht, zu gewährleisten, dass er intakt ist, eine Wiederherstellung möglich ist, wobei dieser Kontext in einem gemeinsamen und zentralisierten Speicher (53, 56) jeder Kemverarbeitungseinheit (50, 51), in für jeden Task spezifischen Bereichen aus einer durch Umschalten wirkenden Doppelbank "Old" und "New", gespeichert wird, wobei das Umschalten dieser Doppelbanken bewerkstelligt wird, indem einfach ein Indexsatz "Old" und "New" vertauscht wird, damit der gültige Kontext somit zu dem vorhergehenden Kontext wird, wobei die Bereiche "Old" beim Lesen erlaubt, um den Tasks Daten zu liefern, jedoch beim Schreiben verboten sind, und somit selbst im Fall einer Fehlfunktion von Mikroprozessoren (54, 57) geschützt sind.

8. Verfahren nach Anspruch 7, wobei die Fehlerwiederherstellung, welche auf einer Wiederherstellung des vorhergehenden Kontexts basiert, durch die Tatsache realisiert wird, dass der Index, welcher den für intakt befundenen vorhergehenden Kontext anzeigt, nicht geändert wird, während er, wenn kein Fehler erfasst wird, am Ende einer der Granularität der Erfassung/Wiederherstellung entsprechenden Periode systematisch umgeschaltet wird.

9. Verfahren nach Anspruch 5, wobei die Granularität der Fehlererfassung/-wiederherstellung der Kontroll-/Befehlszyklus von jedem der Softwaretasks ist, welche auf den Kemverarbeitungseinheiten (50, 51) ablaufen, und wobei eine Wiederherstellung einzig auf dem fehlerhaften Softwaretask ausgeführt werden kann, ohne dass dabei auf die Ausführung der anderen Tasks eingewirkt wird.

10. Verfahren nach Anspruch 5, wobei eine Fehlererfassung ein Versetzen des Mikroprozessors in den Bereitschaftszustand veranlasst, wodurch ein "Loch" einer Periode in dem gewöhnlichen Ausführungszyklus verursacht wird.

11. Verfahren nach Anspruch 5, wobei ein(e) Vergleich/Abstimmung des Kontexts optional auf zwei Weisen realisiert werden kann:
- entweder die Anwendungssoftware fordert explizit eine(n) gruppierte(n) Vergleich/Abstimmung von Kontextdaten, um sie einzeln zu sichern, wenn sie für intakt befunden werden, wobei diese Anforderung systematisch am Ende einer Periode, welche der Granularität der Erfassung/Wiederherstellung entspricht, realisiert wird;
- oder, je nach Stand ihrer Berechnungen, erfasst die Hardwarevorrichtung zur Überwachung von Speicherzugriffen (55, 58) jeder Kernverarbeitungseinheit (50, 51) jeden Schreibversuch in die Kontextbereiche und unterzieht ihn systematisch einem/einer Vergleich/Abstimmung, um seine Richtigkeit zu überprüfen.

12. Verfahren nach Anspruch 5, wobei drei Stufen von Fehlereingrenzungsbereichen definiert sind: räumlich, zeitlich und softwarebezogen.

13. Verfahren nach einem beliebigen der Ansprüche 5 bis 12, welches bei einem elektronischen Bordsystem und/oder dem Raumfahrtbereich verwendet wird.

## Claims

1. Computer system for the processing of different fault types with a given error coverage level, constituted by:
• at least one duplication of the processing unit comprising in each case a microprocessor and a memory,
• a centralised device (52) for managing the processing units and inputs/outputs incorporating:
- means for the macro-synchronization of the processing units, the macro-synchronization corresponding to the fact that said device once a message has been received from one of the processing units implementing the same software in an asynchronous manner, waits for a maximum given time period for the reception of equivalent messages coming from the other processing units, each processing unit being stopped at the same point in the software for transmitting said message, if said messages are different said means indicate an error, whilst if said messages are identical, said means perform the said message and then discharge said processing units,
- comparison/voting means for data generated by the processing units,
- decision-making means in order to initiate a correction phase for different error cases and means making it possible to simultaneously transmit said correction request to all the processing units,
- means making it possible to effect inputs/outputs,
- links respectively connecting each processing unit to the device for managing the processing units and inputs/outputs,
**characterized in that** said computer system is suitable for the processing of transient errors with a coverage level exceeding 99%, said system being such that:
- said duplication of the processing units is strictly limited to the processing unit cores (50, 51), each having:
- said memory (53, 56) protected by a device generating and controlling a detection and error correction code,
- devices (55, 58) for monitoring memory accesses integrating means for protecting themselves against singular events comprising:
- means for segmenting the memory and verifying access rights to each segment (53, 56),
- means for the specific protection of segments of the memory (53, 56) allocated to the safeguarding of the coverage context,
- means for generating a correction request signal to the device (52) for managing the processing unit cores and inputs/outputs,
- said centralised device (52) for managing the processing units and inputs/outputs integrating means for protecting against singular events, also comprises:
- means for receiving said correction requests from the memory access monitoring devices (55, 58),
- means for direct access to the memory of the processing unit cores.

2. System according to claim 1, in which the memory access watch device (55, 58) includes the means for allowing:
- memory zones for each task to be differentiated,
- the accesses to the memory zone affected by the current task to be authorised,
- the accesses to the memory zones involved in other tasks to be forbidden.

3. System according to claim 1, in which the memory access watch device (55, 58) includes the means for allowing:
- this context to be memorised in a shared and centralised memory (53, 56) without needing any specific storage device,
- the memory zones involved in saving the context from each task to be differentiated,
- each zone used for memorising this context to be controlled in a double "Old" and "New" bank,
- to make the double "Old" and "New" banks work in flip-flop,
- the double banks to be flip-flopped by simply inverting a set of "Old" and "New" indexes,
- the "Old" zones to be authorised in reading whilst prohibiting them in writing.

4. System according to any one of the preceding claims, which is used in an onboard electronic system and/or in the spatial field.

5. Process for making a computer system tolerant to faults of different types with a given error coverage rate:
• simultaneous performance of identical software in an independent and asynchronous manner on at least two processing units,
• centralizing the following operations in the management function of the processing units and inputs/outputs:
- macro-synchronization of the different simultaneous runs of the software, the macro-synchronization corresponding to the fact that said device once it has received a message from one of the processing units all of which run the same software in an asynchronous manner, waits for a maximum given time period for the reception of equivalent messages coming from the other processing units, each processing unit being stopped at the same point in the software in order to transmit said message, if the said messages are different the said means indicate an error, if the said messages are identical the said means implement said message and then discharge the said processing units,
- comparison/voting for all the data generated by the different software runs,
- when an error is detected, no matter what its source, taking of a decision in order to initiate a correction and transmission phase simultaneously with the different runs of the software for a correction request,
- implementation of the inputs/outputs at the request of the software,
- implementing the interface between the software taking place simultaneously and the management function of the processing units and the inputs/outputs,
**characterized in that** said process is usable for the processing of transient errors with a coverage rate exceeding 99%, said process also permitting:
• the simultaneous running of identical software on at least two units strictly limited to the processing unit cores and in an independent and asynchronous manner, which corresponds to said simultaneous run on at least two processing unit cores, but also responds to the following operation:
- the transient errors affecting the memory (53, 56) of the processing unit cores (50, 51) being detected and corrected by means of the use of a detection and correction code stored in the memory associated with a software scanning task,
- the satisfactory operation of the respective microprocessor (54, 57) of the processing unit cores (50, 51) is verified as a result of a segmentation of the associated memory to monitoring the memory accesses ensuring that the microprocessor does indeed have access rights to the current segment of the memory (53, 56), said memory access monitoring itself being protected against singular events in the following way:
- the memory segments allocated to safeguarding the coverage context have a high reliability level due to a specific monitoring of the memory accesses, in order to ensure that a malfunctioning microprocessor (54, 57) cannot generate an error in these critical zones,
- a correction request is transmitted to the management function (52) of the processing units and inputs/outputs in the case of a violation of the access rights,
- centralising the following operations in the management function of the processing units and inputs/outputs, which corresponds to said centralisation of the operations in the management functions of the processing units and the inputs/outputs, but also includes a protection against singular events of the management function of the processing units and the inputs/outputs and also includes the following functions:
- reception of correction requests from the memory access monitoring functions following on to an error detection,
- when an error is detected, no matter what its source, decision taken to initiate a correction and transmission phase of a correction request simultaneously with the different runs of the software,
- direct access to the memory of the processing unit cores.

6. Process according to claim 5, in which there is a confinement zone for errors between software tasks, in such a way that a faulty microprocessor (54, 57) can only disturb the variables of the current task but not those of the other tasks.

7. Process according to claim 5, in which, in the event of error detection, a recovery is possible thanks to the vote then the memorisation of the preceding context of the software tasks, and thanks to it specific protection allowing to guarantee that it is healthy, with this context being memorised in a shared and centralised memory (53, 56) in each processing unit (50, 51), in some memory zones specific to each task in a double "Old" and "New" bank working in flip-flop, the flip-flop for these double banks is performed by simply inverting an "Old" and "New" index set so that the current context will thus become the preceding context, with the "Old" zones being authorised in reading to be used as input data for the tasks but forbidden in writing and so protected even in the event of a malfunction of the microprocessors (54, 57).

8. Process according to claim 7, in which the error recovery based on a restoration of the preceding context is performed thanks to the fact that the index stating the preceding context deemed to be healthy is not changed, when it is systematically flip-flopped at the end of the period corresponding to the detection/recovery granularity when no error is detected.

9. Process according to claim 5, in which the error detection/recovery granularity is the control/command cycle for each one of the software tasks being executed on the processing units (50, 51) and in which a recovery may only be performed on the faulty software task without the execution of the other tasks being affected by it.

10. Process according to claim 5, in which an error detection entails the microprocessor going into standby mode, thereby producing a "hole" in a period in the usual execution cycle.

11. Process according to claim 5, in which the comparison/vote of the context may be performed optionally in two ways:
- either, the application software explicitly demands a grouped comparison/vote of the context data so as to save them only if they are deemed to be healthy, with this demand being made systematically at the end of the period corresponding to the detection/recovery granularity;
- or, as their calculation progresses, the hardware device for monitoring memory accesses (55, 58) in each processing unit (50, 51) detects any attempt at writing in the context zones and systematically subjects it to a comparison/vote to verify its veracity.

12. Process according to claim 5, in which three error confinement zone levels are defined: spatial, temporal and software levels.

13. Process according to any one of claims 5 to 12, which is used in an onboard electronic system and/or in the space field.
